# EUROPÄISCHE PATENTSCHRIFT

(11) **EP 4 584 505 B1**
(45) Veröffentlichungstag und Bekanntmachung des Hinweises auf die Patenterteilung: **29.07.2026**
(21) Anmeldenummer: 23761514.1
(22) Anmeldetag: 23.08.2023
(51) Int. Cl.: F16B 5/06, F16B 21/04

(54) **VERBINDUNGSVORRICHTUNG UND SYSTEM**
CONNECTING DEVICE AND SYSTEM
DISPOSITIF ET SYSTÈME DE RACCORDEMENT

(30) Priorität: 09.09.2022 DE 102022122946
(43) Veröffentlichungstag der Anmeldung: 16.07.2025
(73) Patentinhaber: KUKA Deutschland GmbH, 86165 Augsburg (DE)
(72) Erfinder: RIEDEL, Martin, 86165 Augsburg (DE); CLAUDER, Tom, 86163 Augsburg (DE)
(74) Vertreter: Dorow, Florian
(86) Internationale Anmeldenummer: PCT/EP2023/073132
(87) Internationale Veröffentlichungsnummer: WO 2024/052123

(56) Entgegenhaltungen:
- EP-A1- 3 904 706
- EP-A2- 3 081 347
- EP-B1- 2 040 572

## Beschreibung

Die Erfindung betrifft eine Verbindungsvorrichtung zum mechanisch formschlüssigen Verbinden eines ersten Gegenstands mit einem zweiten Gegenstand, und ein zugehöriges System.

Die EP 2 040 572 B1 beschreibt eine mechanisch-magnetische Verbindungskonstruktion mit einer Verriegelungsvorrichtung mit wenigstens einem Federverriegelungselement, das in einem Verbindungsmodul angeordnet ist, und einem bewegbaren Sperrstück zum formschlüssigen Verriegeln der Verbindungsmodule, das in einem anderen Verbindungsmodul angeordnet ist. Das Federverriegelungselement ist so ausgebildet, dass es beim Schließen der Verbindungskonstruktion gegen das Sperrstück gedrängt wird. Das Federverriegelungselement, das Sperrstück und die miteinander in Berührung kommenden Flächenabschnitte des Federverriegelungselements und des Sperrstücks sind so ausgebildet, dass das Federverriegelungselement in eine konstruktiv festgelegte Richtung ausgelenkt wird und in das Sperrstück einschnappt, wenn sich das Verriegelungselement und das Sperrstück relativ aufeinander zu bewegen.

Die EP 3 081 347 A2 zeigt ein Roboter-Bedienhandgerät mit einem handgriffartigen Gehäuse, das eine integrierte Sicherheits-Grundsteuervorrichtung sowie mindestens einen Halter mit Steckverbindungsmittel umfasst. Dieses Steckverbindungsmittel ist zum werkzeuglosen, manuell lösbaren Ankoppeln an ein externes, elektronisch kommunizierendes Gerät - etwa ein Tablet, eine Robotersteuerung oder eine mobile Plattform - ausgelegt. Die mechanische Verbindung erfolgt form- oder kraftschlüssig über korrespondierende Gegensteckverbindungsmittel, wobei verschiedene Kopplungsrichtungen und Orientierungen unterstützt werden

Aufgabe der Erfindung ist es, eine Verbindungsvorrichtung zum mechanisch formschlüssigen Verbinden eines ersten Gegenstands mit einem zweiten Gegenstand und ein zugehöriges System zu schaffen, wobei die Verbindungsvorrichtung auf einfache bzw. intuitive Weise verriegelt und/oder entriegelt werden kann, insbesondere einhändig verriegelt und/oder entriegelt werden kann, speziell ohne, dass separate Entsperr-Betätigungsmittel notwendig sind.

Die Aufgabe wird gelöst durch eine Verbindungsvorrichtung zum mechanisch formschlüssigen Verbinden eines ersten Gegenstands mit einem zweiten Gegenstand, aufweisend:
- ein Kopplungsmittel mit einem ersten Befestigungsabschnitt zum Befestigen des Kopplungsmittels an dem ersten Gegenstand, mit einer Buchse mit einer Öffnung über die ein Buchsenhohlraum der Buchse in einer axialen Steckrichtung zugänglich ist, und wenigstens einem zwischen einer Verriegelungsstellung und einer Entriegelungsstellung verstellbar gelagertes Verriegelungselement, das in seiner Verriegelungsstellung in den Buchsenhohlraum der Buchse hineinragt und in seiner Entriegelungsstellung den Buchsenhohlraum der Buchse freigibt,
- ein Gegenkopplungsmittel mit einem zweiten Befestigungsabschnitt zum Befestigen des Gegenkopplungsmittels an dem zweiten Gegenstand, mit einem zur Buchse des Kopplungsmittels korrespondierenden Stecker mit einem in die Öffnung des Buchsenhohlraums der Buchse in der axialen Steckrichtung einsteckbaren Schaft, und wenigstens einem in der Verriegelungsstellung des Verriegelungselements der Buchse formschlüssig zusammenwirkendes Gegenverriegelungselement,
- wobei der Buchsenhohlraum der Buchse und der zum Buchsenhohlraum korrespondierende Schaft des Steckers aufeinander abgestimmte Querschnittskonturen aufweisen, welche ein relatives Verdrehen von Kopplungsmittel und Gegenkopplungsmittel um eine zur Steckrichtung parallelen Drehachse in einem verbundenen Zustand von Kopplungsmittel und Gegenkopplungsmittel erlauben,
- des Weiteren aufweisend ein am Gegenkopplungsmittel angeordnetes Entriegelungsmittel, das ausgebildet ist, bei einem relativen Verdrehen von Kopplungsmittel und Gegenkopplungsmittel um die zur Steckrichtung parallelen Drehachse das Verriegelungselement des Kopplungsmittel in einem vorgegebenen relativen Drehwinkelstellungsbereich von Kopplungsmittel und Gegenkopplungsmittel aus seiner Verriegelungsstellung in eine Entriegelungsstellung zu bewegen, in der das Verriegelungselement des Kopplungsmittel und das Gegenverriegelungselement des Gegenkopplungsmittel außer Eingriff sind, so dass das Kopplungsmittel und das Gegenkopplungsmittel entgegen der Steckrichtung voneinander trennbar sind.

Die Verbindungsvorrichtung bildet ein formschlüssiges Verbindungselement. Die Verbindungsvorrichtung umfasst insoweit zwei trennbare Verbindungsmittel, nämlich das Kopplungsmittel und das Gegenkopplungsmittel, die in einem verbunden Zustand getrennt werden können und aus einem getrennten Zustand miteinander gekoppelt, **d.h.** verbunden werden können. Mit der Verbindungsvorrichtung können an und für sich beliebige zwei Gegenstände miteinander verbunden bzw. voneinander getrennt werden. Um das Kopplungsmittel mit dem einen Gegenstand verbinden zu können, weist dieses einen ersten Befestigungsabschnitt auf. Um das Gegenkopplungsmittel mit dem anderen Gegenstand verbinden zu können, weist dieses einen zweiten Befestigungsabschnitt auf. Der jeweilige erste Befestigungsabschnitt und jeweilige zweite Befestigungsabschnitt können beispielsweise an dem zugeordneten Gegenstand festgeschraubt, festgeklebt oder festgerastet werden. Alternativ kann der jeweilige erste Befestigungsabschnitt und jeweilige zweite Befestigungsabschnitt gegebenenfalls auch einteilig mit dem zugeordneten Gegenstand ausgebildet sein, beispielsweise an ein Gehäuse des jeweiligen Gegenstands angeformt sein.

Die formschlüssige Verbindung von Kopplungsmittel und Gegenkopplungsmittel umfasst im Wesentlichen eine Kombination aus einem Stecker und einer Buchse im allgemeinen Sinne. Mit Stecker wird insoweit ein Vorsprung verstanden, der auch als Stift, Zapfen, Pin oder männliches Verbindungsteil bezeichnet werden kann. Mit Buchse wird insoweit ein Rücksprung verstanden, der auch als Steckdose, Sockel, Fassung oder weibliches Verbindungsteil bezeichnet werden kann. Der Stecker und die Buche sind korrespondierend gestaltet, so dass sie formschlüssig mit lediglich geringem oder gar keinem Spiel ineinandergesteckt werden können.

Bei der erfindungsgemäßen Verbindungsvorrichtung haben der Buchsenhohlraum der Buchse und der zum Buchsenhohlraum korrespondierende Schaft des Steckers aufeinander abgestimmte Querschnittskonturen, welche ein relatives Verdrehen von Kopplungsmittel und Gegenkopplungsmittel um eine zur Steckrichtung parallelen Drehachse in einem verbundenen Zustand von Kopplungsmittel und Gegenkopplungsmittel erlauben. Die Verbindungsvorrichtung soll es erfindungsgemäße ermöglichen, dass die beiden miteinander über die Verbindungsvorrichtung verbundenen Gegenstände trotz bestehender Verbindung weiterhin gegeneinander verdreht werden können. Das Verdrehen der beiden Gegenstände gegeneinander kann entweder für volle 360 Grad möglich sein, oder gegebenenfalls lediglich für einen geringeren Drehwinkel möglich sein, beispielsweise je nach Bauart, maximal lediglich um 270 Grad, um 180 Grad oder um 90 Grad.

Über die gemäß der Bauart zugelassenen Drehachse definiert sich demgemäß auch die Steckrichtung, in der das Kopplungsmittel und das Gegenkopplungsmittel zusammengesteckt werden bzw. in entgegengesetzter Richtung die Trennrichtung, in der das Kopplungsmittel und das Gegenkopplungsmittel wieder voneinander getrennt werden können.

Damit im zusammengesteckten Zustand das Kopplungsmittel und das Gegenkopplungsmittel sich nicht unbeabsichtigt voneinander lösen, weist das Kopplungsmittel ein Verriegelungselement und das Gegenkopplungsmittel ein Gegenverriegelungselement auf. In der Verriegelungsstellung von Verriegelungselement und Gegenverriegelungselement können das Kopplungsmittel und das Gegenkopplungsmittel nicht voneinander getrennt werden, selbst dann nicht, wenn das Kopplungsmittel und das Gegenkopplungsmittel in Trennrichtung auseinandergezogen werden. Nur dann, wenn sich das Verriegelungselement und das Gegenverriegelungselement in der Entriegelungsstellung befinden, können das Kopplungsmittel und das Gegenkopplungsmittel in Trennrichtung voneinander getrennt werden.

Beim Zusammenstecken von Kopplungsmittel und Gegenkopplungsmittel geraten das Verriegelungselement und das Gegenverriegelungselement selbsttätig bzw. automatisch in ihre Verriegelungsstellung, in der das Kopplungsmittel und das Gegenkopplungsmittel in Trennrichtung nicht voneinander getrennt werden können. Um das Verriegelungselement und das Gegenverriegelungselement in ihre Entriegelungsstellung zu bringen, ist das Entriegelungsmittel vorgesehen.

Erfindungsgemäß ist das Entriegelungsmittel ausgebildet, bei einem relativen Verdrehen von Kopplungsmittel und Gegenkopplungsmittel um die zur Steckrichtung parallelen Drehachse das Verriegelungselement des Kopplungsmittels in einem vorgegebenen relativen Drehwinkelstellungsbereich von Kopplungsmittel und Gegenkopplungsmittel aus seiner Verriegelungsstellung in eine Entriegelungsstellung zu bewegen, in der das Verriegelungselement des Kopplungsmittels und das Gegenverriegelungselement des Gegenkopplungsmittels außer Eingriff sind, so dass das Kopplungsmittel und das Gegenverriegelungselement entgegen der Steckrichtung voneinander getrennt werden können, insbesondere indem das Kopplungsmittel und das Gegenverriegelungselement in Trennrichtung auseinandergezogen werden.

Ziel der Erfindung ist es insoweit einen formschlüssigen Kopplungsmechanismus zu schaffen, welcher einfach und direkt zu verbinden und einhändig wieder zu trennen ist, insbesondere ohne ein zusätzliches manuell separat zu betätigendes Entsperr-Eingabemittel betätigen zu müssen.

Dabei soll nur durch eine Relativverdrehung des Steckers zur Buchse der Stecker eine Entsperrposition einnehmen können und entgegengesetzt zur Zuführrichtung entkoppelt werden. Die Entsperrbewegung soll dabei einerseits einfach und intuitiv erfolgen können, andererseits nur bewusst möglich sein, um eine versehentliche Fehlentkopplung zu vermeiden. Die Hauptunterschiede der hier vorgeschlagenen Lösungen bestehen in der Geometrie des Steckers, der Schnapphakenanordnung des Gegenhalters und in der Art die Entriegelung haptisch zu gestalten.

Das Entriegelungsmittel kann in einer Weiterbildung der Verbindungsvorrichtung wenigstens einen vom Schaft des Steckers radial nach außen vorspringenden Fortsatz aufweisen, der ausgebildet ist, in einem ersten Drehwinkelstellungsbereich des Gegenkopplungsmittels relativ zum Kopplungsmittel das Verriegelungselement in die Entriegelungsstellung zu drücken und in einem vom ersten Drehwinkelstellungsbereich verschiedenen zweiten Drehwinkelstellungsbereich des Gegenkopplungsmittels relativ zum Kopplungsmittel das Verriegelungselement in seiner Verriegelungsstellung zu belassen, wobei das Verriegelungselement in seine Verriegelungsstellung federnd vorgespannt ist und im ersten Drehwinkelstellungsbereich des Gegenkopplungsmittels relativ zum Kopplungsmittel das Verriegelungselement durch den Fortsatz des Entriegelungsmittels entgegen einer Federkraft in seine Entriegelungsstellung radial nach außen gedrückt wird.

Der Stift des Steckers ist in dieser Ausführungsform nicht vollständig rotationssymmetrisch aufgebaut. Durch zusätzliche, gegenüberliegende Ausprägungen am Stift, wie beispielsweise radiale Vorsprünge, ist dieser in der Lage den Gegenhalter, insbesondere mit Schnapphaken an der Buchse aufzuweiten. Die Ausprägungen können sich oberhalb des Hinterschnittes bzw. der Schnapphakenkontur, auf Höhe Hinterschnittes bzw. der Schnapphakenkontur, oder unterhalb des Hinterschnittes bzw. der Schnapphakenkontur befinden. Wenn der Stecker in der richtigen Orientierung zum Gegenhalter ausgerichtet ist, so dass diese geweitet werden, kann der Stift des Steckers anschließend aus der Buchse entnommen werden. Dazu dürfen die Schnapphakenkonturen des Gegenhalters, **d.h.** des Kopplungsmittels, nur im Bereich der Ausprägung des Stiftes vorhanden sein.

In einer weiteren Ausführungsform kann das Entriegelungsmittel wenigstens eine sich axial entlang des Schaftes des Steckers erstreckende Vertiefung in der Mantelfläche des Schaftes aufweist, die ausgebildet ist, in einem ersten Drehwinkelstellungsbereich des Gegenkopplungsmittels relativ zum Kopplungsmittel mit dem radial nach innen in den Buchsenhohlraum des Kopplungsmittels vorspringenden Verriegelungselement zu fluchten, wobei in einem vom ersten Drehwinkelstellungsbereich verschiedenen zweiten Drehwinkelstellungsbereich des Gegenkopplungsmittels relativ zum Kopplungsmittel das Entriegelungsmittel in radialer Richtung mit dem Verriegelungselement überlappt, so dass in dieser Verriegelungsstellung das Gegenkopplungsmittel in axialer Richtung formschlüssig an dem Kopplungsmittel gehalten ist.

Insoweit kann also auch der Stecker Ausnehmungen aufweisen und insoweit eine Art von Schlüsselfläche ausbilden, um in geeigneter Drehposition an den vorhandenen Schnapphaken des Gegenhalters vorbeizulaufen und dem Formschluss zu entgehen.

Die Vorteile können in der gleichen Koppelrichtung und Entkoppelrichtung liegen und darin, dass kein separater, zusätzlicher Entkoppelmechanismus notwendig ist.

Das Gegenkopplungsmittel kann über einen Freilauf an das Kopplungsmittel angekoppelt sein, derart, dass ein relatives Drehen des Gegenkopplungsmittels und des Kopplungsmittels gegeneinander nur in eine Drehrichtung möglich ist.

Mit einer weiteren Ergänzung kann eine Rastung integriert werden, um die Winkelstellung je nach Rastteilung stabil zu halten. Insoweit kann eine Rücklaufsperre entweder in den Stecker oder in die Buchse integriert sein, um die relative Rotation von Kopplungsmittel und Gegenkopplungsmittel auf nur eine Drehrichtung zu begrenzen.

Bei bekannten Systemen ist eine Entriegelung oder Verriegelung durch Verdrehen oftmals komplett in einem definierten Winkelbereich vorgegeben, beispielsweise eine 0-Grad-Position für eine Offenstellung und eine 90-Grad-Position für eine Verriegelungsstellung. Alternativ ist der Winkelbereich komplett frei. Die Entriegelung passiert dann meistens durch das Verdrehen in die entgegengesetzte Verriegelungsdrehrichtung. Alternativ wird die Verriegelung durch eine insbesondere 90 Grad Verdrehung realisiert und bei einer weiteren 90 Grad Verdrehung in oder gegen die Verschlussrichtung wieder geöffnet.

Durch die vorgeschlagene Rücklaufsperre kann eine Verriegelung bis zu fast einer vollständige Umdrehung benötigen, um wieder geöffnet zu werden. Die notwendige Verdrehung für eine Entkopplung ist aber abhängig, ob die Zusammenführpositon von Stecker und Buchse weiterhin in der Orientierung frei bleibt, oder ob diese fest vorgegeben wird. Der Vedrehwinkel kann also je nach Koppelorientierung variieren. Die Entriegelungsposition ist dann aber immer bei einer definierten Verdrehorientierung der beiden Körper zueinander und sollte für eine bessere Haptik für den Nutzer durch eine zusätzliche Verriegelung gesperrt werden. Erst nach einem erneutem Koppelvorgang, können die beiden Körper erneut zueinander verdreht werden.

In einer Weiterbildung kann eine zweite Stufe eingefügt werden, um für eine höhere Entkoppelungssicherheit zu sorgen. Die Buchse hat im Einführbereich vor dem Gegenhalter mit Schnapphaken im Gehäuse ein oder mehrere Aussparungen als zweite Stufe, und zwar verdreht zur Aufweite-Drehposition. Der Stecker mit Ausprägung kann nur in richtiger Orientierung zur Aussparung in die Buchse eingesetzt und verrastet werden. Für den Entkopplungsprozess der ersten Stufe muss der Stecker zunächst auf Entsperrstellung verdreht werden, damit dieser den Gegenhalter aufweitet und aus dem Schnapphaken herausgezogen werden kann. Der Stecker muss weiterhin gezielt entgegen des Gegenhalters der Buchse gezogen werden, da die Verrastung der ersten Stufe in jeder Drehposition wieder möglich ist. Anschließend muss der Stecker weiter verdreht werden, damit die Ausprägung passend zu den Aussparungen der Buchse ausgerichtet ist. Nun kann der Stecker vollständig entnommen werden.

Durch Kombinationen mit einer Rücklaufsperre und einzigartig ausgeprägten Aussparungen und/oder Ausprägungen, kann ein Entkoppelungsprozess bis zu eine vollständige Umdrehung benötigen und bietet dadurch eine zusätzliche Entkoppelsicherheit.

So kann die Verbindungsvorrichtung gekennzeichnet sein, durch eine Zwischenebene, in welche das Gegenverriegelungselement des Gegenkopplungsmittel eingeführt wird, wenn das Gegenkopplungsmittel von dem Kopplungsmittel entgegen der Steckrichtung bewegt wird, um in der Entriegelungsstellung das Gegenkopplungsmittel von dem Kopplungsmittel zu trennen, wobei die Zwischenebene formschlüssig wirkende Rückhaltemittel aufweist, welche ein weiteres Trennen des Gegenkopplungsmittels von dem Kopplungsmittel über die Zwischenebene hinweg zunächst verhindert und erst nach einem zusätzlichen Drehen des Gegenkopplungsmittels relativ zum Kopplungsmittel um einen weiteren Drehwinkel zulässt.

In einer alternativen oder ergänzenden Weiterentwicklung kann vorgesehen sein, dass in einer der Entriegelungsstellung entsprechenden relativen Winkelstellung von Kopplungsmittel zu Gegenkopplungsmittel der Stecker des Gegenkopplungsmittels mittels einer Rasteinrichtung relativ zur Buchse des Kopplungsmittels kraftschlüssig und/oder formschlüssig in seiner entriegelbaren Drehstellung stabilisiert gehalten ist.

Die Rasteinrichtung kann ein am Kopplungsmittel in radialer Richtung in den Buchsenhohlraum vorspringend vorgespannter Raststift umfasst, welcher in der Entriegelungsstellung in eine zum Raststift des Gegenkopplungsmittels korrespondierende Vertiefung in dem Schaft des Steckers mechanisch einrastet.

Die Rasteinrichtung kann ein am Kopplungsmittel angebrachten ersten Magneten umfassen, welcher in der Entriegelungsstellung mit einem am Gegenkopplungsmittel angeordneten zweiten Magneten magnetisch zusammenwirkt, um das Gegenkopplungsmittel in der Entriegelungsstellung relativ zum Kopplungsmittel in seiner momentanen Drehwinkelstellung zu halten.

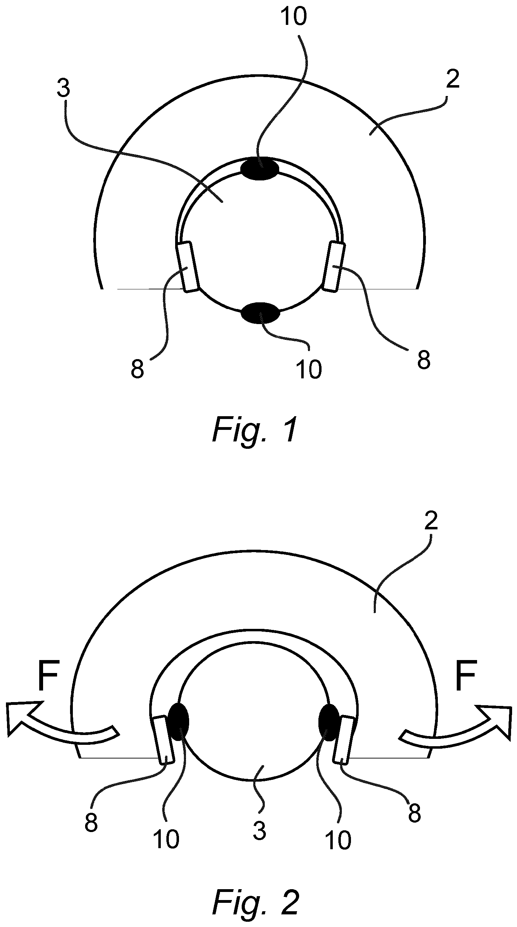

Solche Ausführungsformen sind im Folgenden später nochmals zu Fig. 1 bis Fig. 7 näher erläutert.

In einer abgewandelten Ausführungsform Ein Gegenhalterpaar wird gefedert in einem Rahmen so geführt, dass diese vom Sperrkörper eines Steckers bei Einschub entlang der Drehachse seitlich zurückweichen können und ein Eintauchen des Steckers in den Rahmen ermöglichen. In dieser Ausprägungsform sind die Sperrkörper nicht umlaufend am Stecker ausgeprägt, sondern besitzen Freibereiche.

Im verriegelten Zustand wird der Sperrkörper an den Segmenten der Gegenhalter in Axial- und Radialrichtung formschlüssig festgehalten. Eine Drehung des Steckers um die Drehachse ermöglicht eine weiterhin verriegelte Winkelstellung der beiden Koppelpartner. Erst bei Überschreitung eines Entkoppelwinkels, beispielsweise von 45 Grad, 90 Grad oder 180 Grad, verschwindet die Überdeckung, da der Sperrkörper ab diesem Entkoppelwinkel zwischen den Gegenhaltern liegt. Der Stecker kann so nach einer entsprechenden Drehung wieder in Axialrichtung entfernt werden.

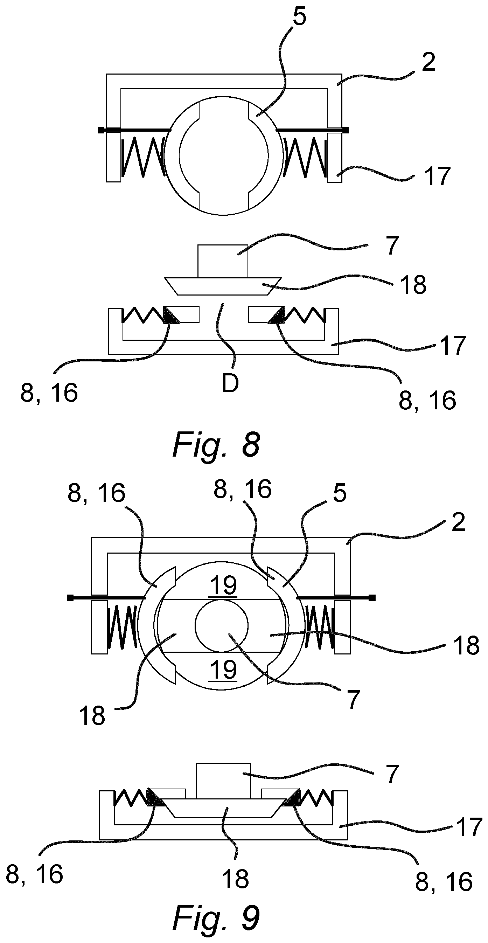

Solche Ausführungsformen sind im Folgenden später nochmals zu Fig. 8 bis Fig. 13 näher erläutert.

Die Gegenhalter und der Sperrkörper können dabei auch wie folgt andere Ausprägungen annehmen.

In einer solchen anderen Ausprägung werden Gegenhalter, Feder und Führung in ein Element zusammengefasst, dass beispielsweise als elastisch biegbare Biegestange oder Biegestangen ausgeführt werden kann, die in einem Rahmen gelagert sind.

Besondern günstig ist in einem solchen Fall die Stangenform mit einem Profil, welches einen höheren Biegewiderstand in einer Richtung aus der Ebene heraus, welche senkrecht zur Drehachse angeordnet ist, und in Querrichtung, also bei einer elastischen Verformung innerhalb der Ebene, welche senkrecht zur Drehachse angeordnet ist, aufweist. Alternativ kann eine Begrenzungswand des Rahmens die Biegestangen so abdecken, dass sie sich nicht in einer Richtung aus der Ebene heraus, welche senkrecht zur Drehachse angeordnet ist, zu nachgiebig verhalten.

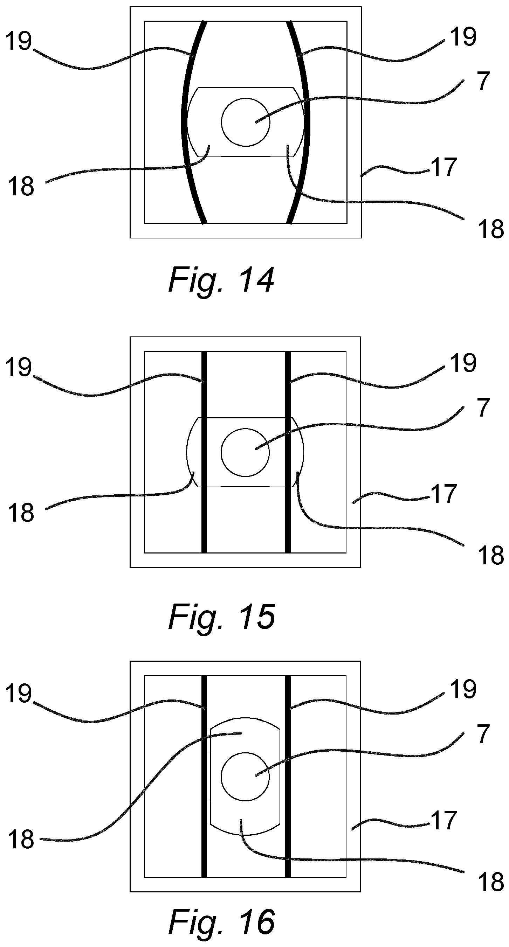

Solche Ausführungsformen sind im Folgenden später nochmals zu Fig. 14 bis Fig. 16 näher erläutert.

Auch eine Umkehr der rückweichenden und federnden Sperrelemente von Rahmen auf den Stecker ist möglich.

So können die rückweichenden und federnden Sperrelemente an dem Stecker vorgesehen sein und die starren Gegenhalter an dem Rahmen vorgesehen sein.

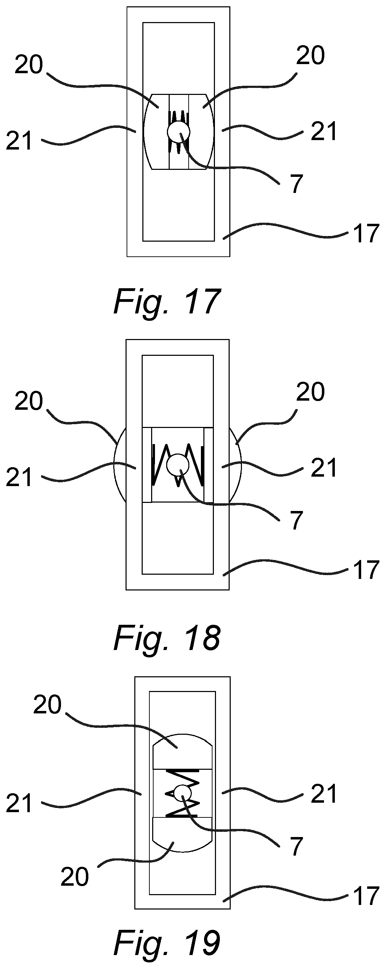

Solche Ausführungsformen sind im Folgenden später nochmals zu Fig. 17 bis Fig. 19 näher erläutert.

Ein weiterer Aspekt der Erfindung ist die Haptik, die es dem Nutzer ermöglichen soll, den Zeitpunkt und die korrekte Stellung zu spüren, an dem eine Entkopplung möglich ist. Außerdem sollte es möglich sein, dem Nutzer zu signalisieren, wenn ein Entkoppelvorgang begonnen wurde bzw. folgt, und/oder dass bei einem Weiterführen der Bewegung beide Koppelpartner (Kopplungsmittel bzw. Stecker und Gegenkopplungsmittel bzw. Buchse) getrennt werden.

In einer ersten Variante kann vorgesehen sein, dass ein Sperrkörper in seine Entsperrposition gedreht wird, ein gefederter Formkörper dann in einen angeschrägten Ausschnitt im Stecker einrastet und den Strecker in dieser Position arretiert.

Ist dieser Ausschnitt dabei linear wie eine Nut entlang der Drehachsrichtung ausgebildet, kann der Stecker kraftfrei entnommen werden. Ist dieser Ausschnitt dabei lokal, punktförmig oder zylindrisch, wie ein Loch ausgeprägt, muss der Stecker zunächst gegen die Federkraft gezogen werden, um entnommen werden zu können.

Der Ausschnitt kann auf dem Sperrköper ausgeführt oder an beliebiger Stelle auf dem Stecker ausgeführt werden. Ebenso ist stets eine Umkehrung von Ausschnitt und Formkörper möglich, **d.h.** der Ausschnitt kann wahlweise an dem Stecker bzw. an der Buchse angeordnet sein, und demgemäß der Formkörper an der Buchse bzw. dem Stecker als komplementäres Teil an angeordnet sein.

Eine solche Variante ermöglicht eine Verdrehung in die Entsperrposition, aber auch darüber hinaus und auch wieder zurück.

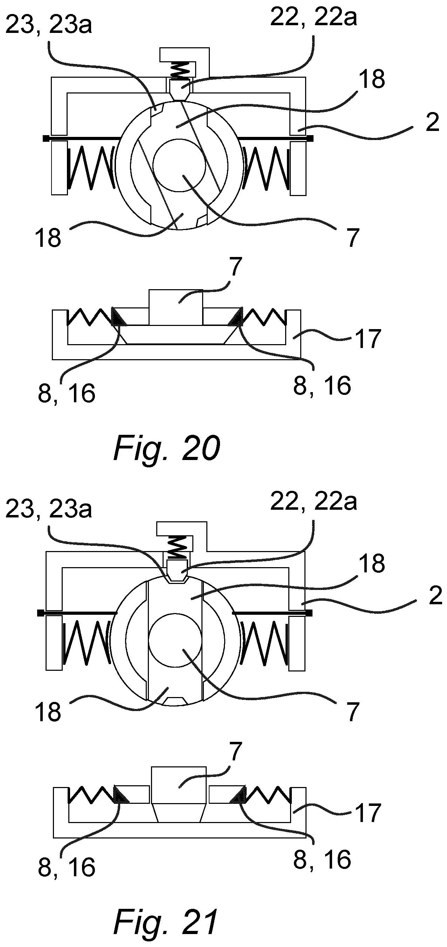

Solche Ausführungsformen sind im Folgenden später nochmals zu Fig. 20 und Fig. 21 näher erläutert.

In einer zweiten Variante kann vorgesehen sein, dass bei dem haptischen Mittel ein Formschluss der Elemente von Ausschnitt und Formkörper realisiert ist, im Gegensatz zur ersten Variante, bei der ein Kraftschluss realisiert ist.

Der Ausschnitt muss im Falle der zweiten Variante als eine in Drehachsrichtung gerichtete Nut ausgeprägt sein.

Die zweite Variante ermöglicht nur eine Verdrehung in die Entsperrposition aber keine Rück- oder Weiterdrehung. Hier muss erst eine vollständige Entnahme des Stecker erfolgen, bevor dies Verbindung durch Wiedereinstecken neu hergestellt werden kann.

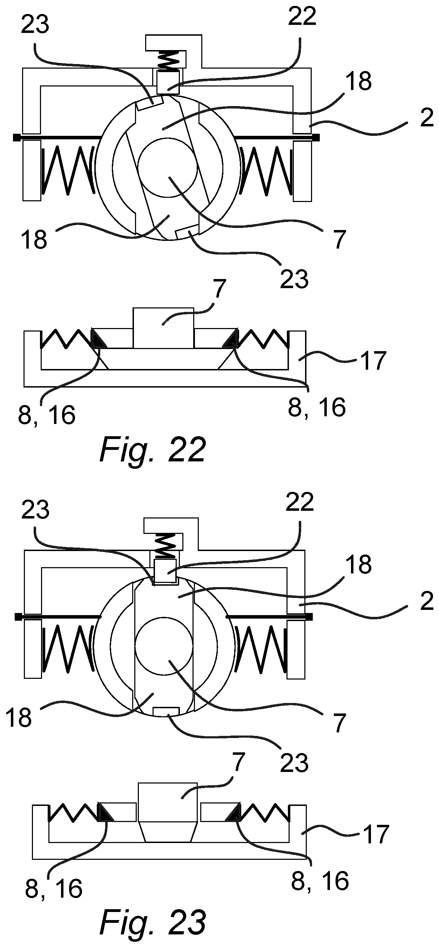

Solche Ausführungsformen sind im Folgenden später nochmals zu Fig. 22 und Fig. 23 näher erläutert.

Eine dritte Variante ist mit der ersten Variante 1 und einem lokalen Ausschnitt vergleichbar, jedoch mit dem Unterschied, dass hier ein oder mehrere Magnetpaare die Mittenarretierung übernehmen, statt einer mechanisch kraftschlüssigen Verbindung. Der Nutzer spürt hierbei, wenn er in die Nähe der Stellung kommt, in der sich die Magnete anziehend gegenüberstehen.

Die Magnete können radial oder in ähnlicher Position axial zur Drehachsrichtung angeordnet sein.

Dabei können die Magnete zur endgültigen Entkopplung entweder durch Scherung oder durch Zug voneinander getrennt werden.

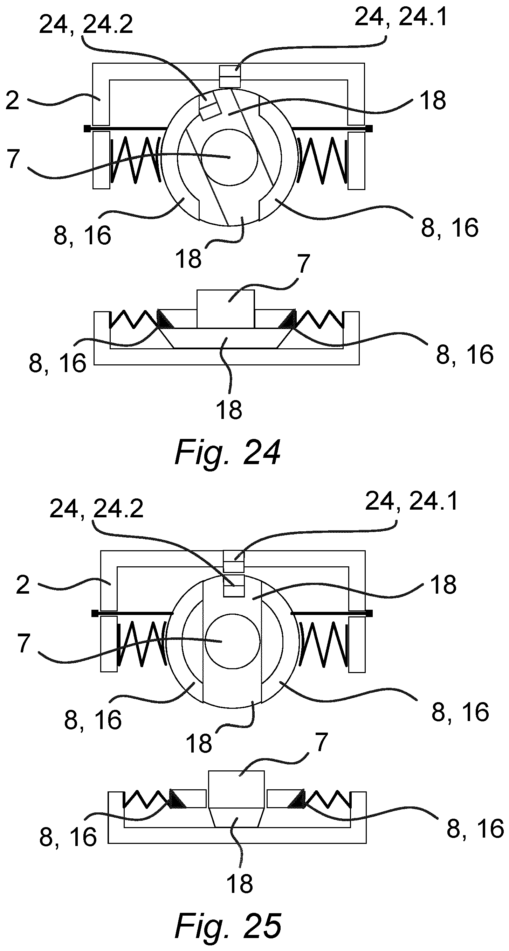

Solche Ausführungsformen sind im Folgenden später nochmals zu Fig. 24 und Fig. 25 näher erläutert.

In einer vierten Variante wird der Stecker durch die Magnetanordnung sowohl in der Entsperrstellung zentriert als auch eine charakteristische Überschreitungskraft erzeugt, wenn der Stecker um einen Winkelbetrag aus der Entsperrstellung verdreht wird. Diese Lösung stellt insoweit ein bi-stabiles System dar.

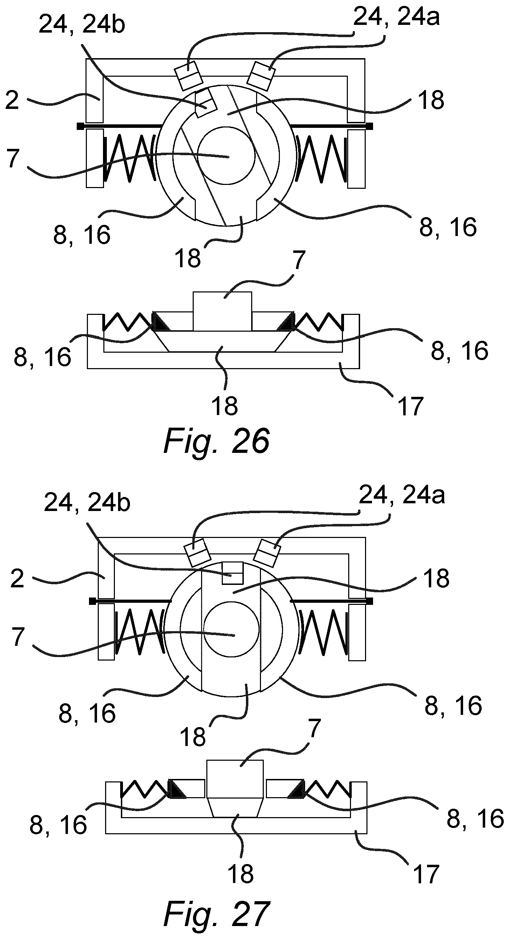

Solche Ausführungsformen sind im Folgenden später nochmals zu Fig. 26 und Fig. 27 näher erläutert.

In einer fünften Variante wird der Stecker mit dem Sperrkörper durch Sperrelemente an den Gegenhaltersegmenten in der Stellung der Entsperrstellung gehalten, sobald er die Sperrelemente überfahren hat.

Diese fünfte Variante ermöglicht nur eine Verdrehung in die Entsperrstellung, aber keine Rück- oder Weiterdrehung. Hier muss erst eine vollständige Entnahme des Steckers erfolgen, bevor dies Verbindung durch Wiedereinstecken neu hergestellt wird.

Der Nutzer spürt einen definierten Kraftaufwand beim Überwinden der Sperrelemente. Die Sperrelemente können in einer Abwandlung auch Teil des Rahmens sein.

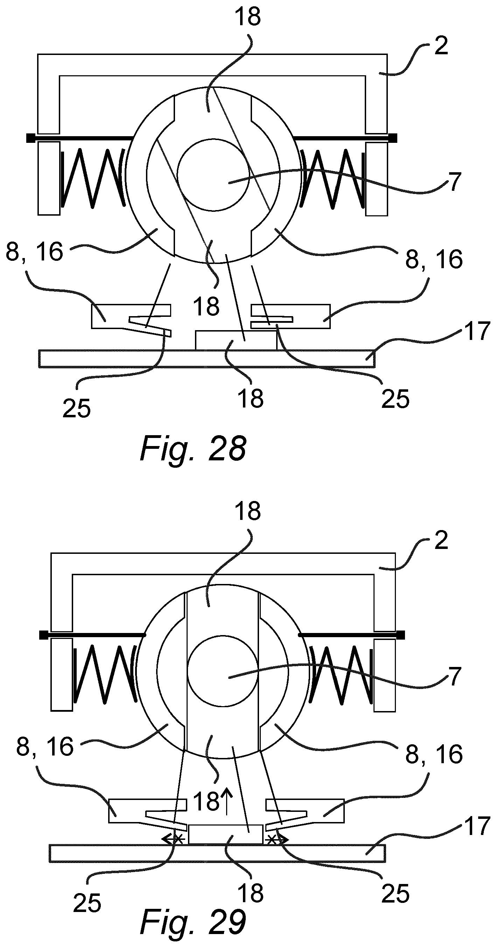

Solche Ausführungsformen sind im Folgenden später nochmals zu Fig. 28 und Fig. 29 näher erläutert.

In einer sechsten Variante wird der Stecker mit dem Sperrkörper durch die Flanken der Gegenhaltersegmenten in der Entsperrstellung gehalten, sobald diese erreicht wird. Dies wird erreicht, indem der Stecker mit seinem Sperrkörper ein elastisches Federelement im Rahmen überfährt, welches ihn leicht anhebt und nach außen verschiebt.

Diese sechste Variante ermöglicht auch nur eine Verdrehung in die Entsperrstellung, aber keine Rück- oder Weiterdrehung. Auch hier muss erst eine vollständige Entnahme des Steckers erfolgen, bevor dies Verbindung durch Wiedereinstecken neu hergestellt wird. Im Unterschied zur zweiten und fünften Variante kann eine Verbindung auch wieder hergestellt werden, indem der Stecker gegen die Feder auf Niveau des Rahmens gedrückt und dann wieder in die Verriegelungsstellung zurückgedreht wird.

Der Nutzer spürt einen definierten Kraftaufwand beim Überwinden des Federelements. Das Federelement kann in einer Abwandlung auch Teil des Steckers, insbesondere des Sperrkörpers sein.

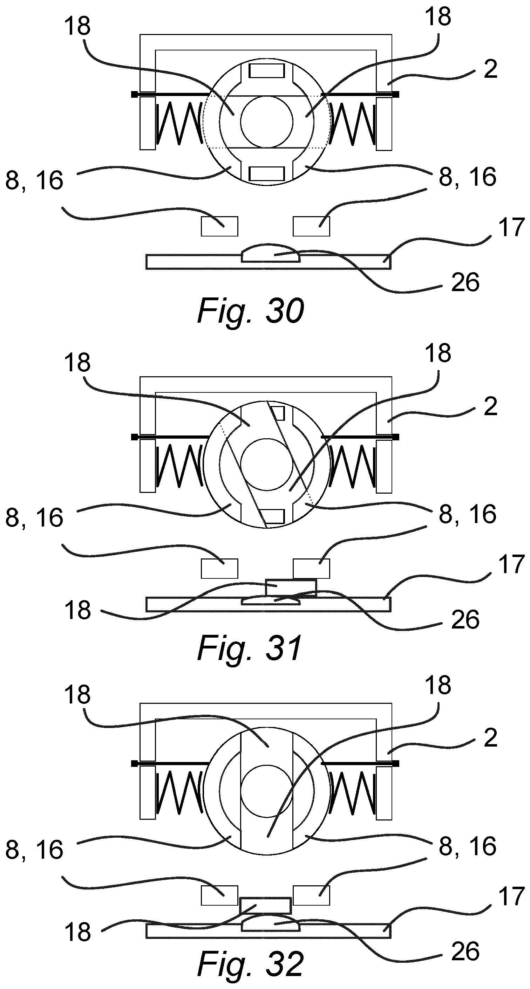

Solche Ausführungsformen sind im Folgenden später nochmals zu Fig. 30 bis Fig. 32 näher erläutert.

Eine siebte Variante basiert vom Prinzip her auf der sechsten Variante, mit dem Unterschied, dass die mechanischen Federelement ersetzt sind, durch Magnetpaare, die insbesondere derart angeordnet sind, dass sie auf einer abstoßenden Wirkung funktionieren.

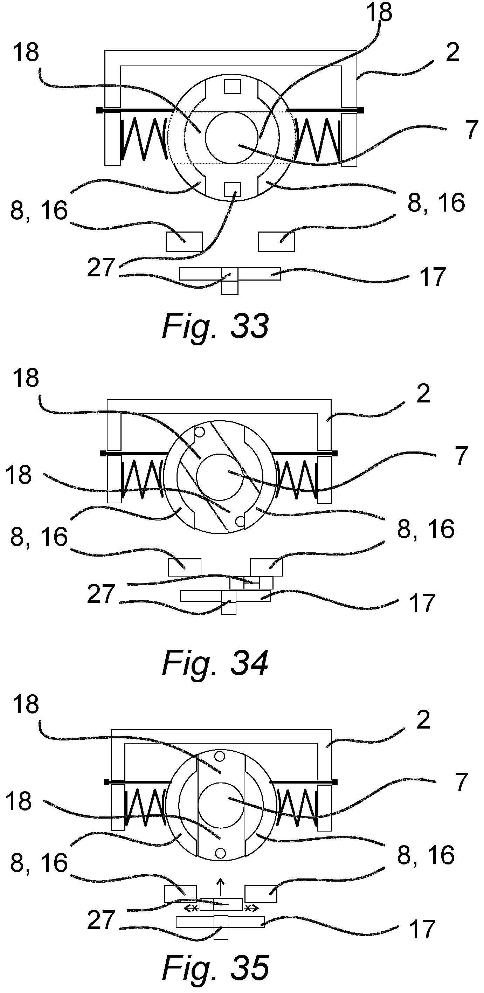

Solche Ausführungsformen sind im Folgenden später nochmals zu Fig. 33 bis Fig. 35 näher erläutert.

In einer weiteren Art von Ausführungsformen erfolgt die Entriegelung nicht durch "Freidrehen" in eine Stellung ohne Überdeckung von Sperrkörper und Gegenhalter, sondern der Gegenhalter, insbesondere die Gegenhaltersegmente werden durch relatives Verdrehen des Steckers relativ zum Rahmen radial nach außen geöffnet, bis der Stecker entgegen der Steckrichtung entfernt werden kann.

Diese Variante besitzt beispielsweise vier Segmente an Gegenhaltern, die jeweils mindestens einseitig insbesondere beidseitig Formelemente, insbesondere Formschrägen besitzen. Der Stecker besitzt beispielsweise einen durchgängigen Sperrkörper, der von den Gegenhaltern formschlüssig gehalten wird. Zudem besitzt der Stecker auf Höhe der Gegenhalter Auslöseelemente, die sich im verriegelten Zustand in den freien Taschen zwischen den Gegenhaltern befinden. Eine Verdrehung bewirkt einen Kontakt und ein geführtes Aufdrücken der Segmente. Die Größe der Taschen im Verhältnis zu der Größe der Auslöseelemente definiert den Entriegelungszeitpunkt. Ist das Verhältnis klein, erfolgt bereits bei kleiner Relativdrehung die Auslösung. Ist das Verhältnis groß, ist es anderes herum und der Stecker bleibt in einem größeren Winkelbereich gekoppelt.

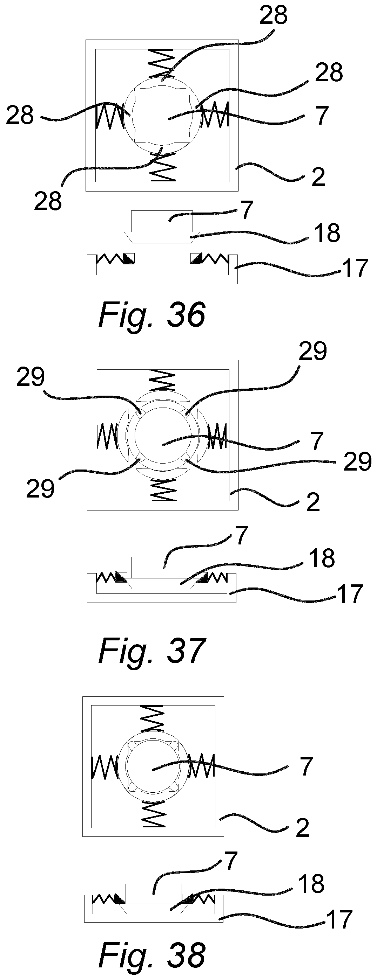

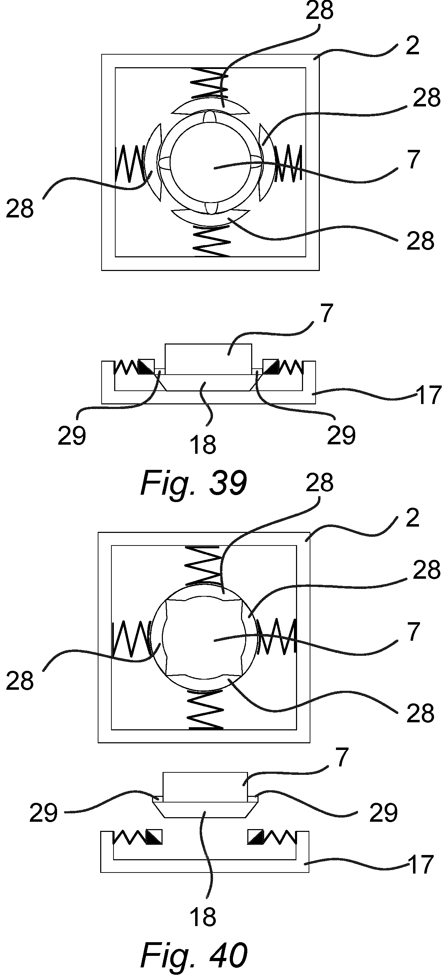

Solche Ausführungsformen sind im Folgenden später nochmals zu Fig. 36 bis Fig. 40 näher erläutert.

Eine weitere Art von Ausführungsformen ist vergleichbar mit der dritten Variante, jedoch mit dem Unterschied, dass die Funktion der Auslöseelemente hier von segmentierten Sperrkörpern und deren Flanken übernommen wird, die bei Verdrehung auf Formelemente der Gelenkhaltersegmente treffen. Im verriegelten Zustand tauchen die segmentierten Sperrkörpern in Hohlräume unter die Gelenkhaltersegmente ein. Ein notwendiger Freiraum ist zwischen den Sperrkörpersegmenten ausgebildet.

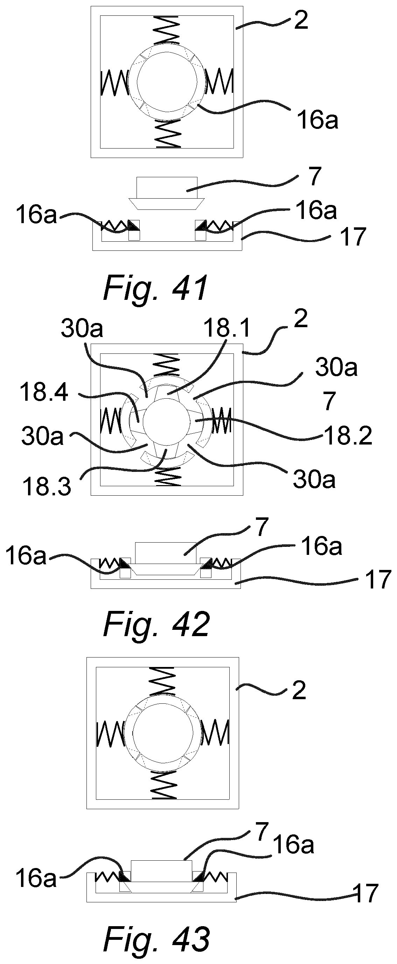

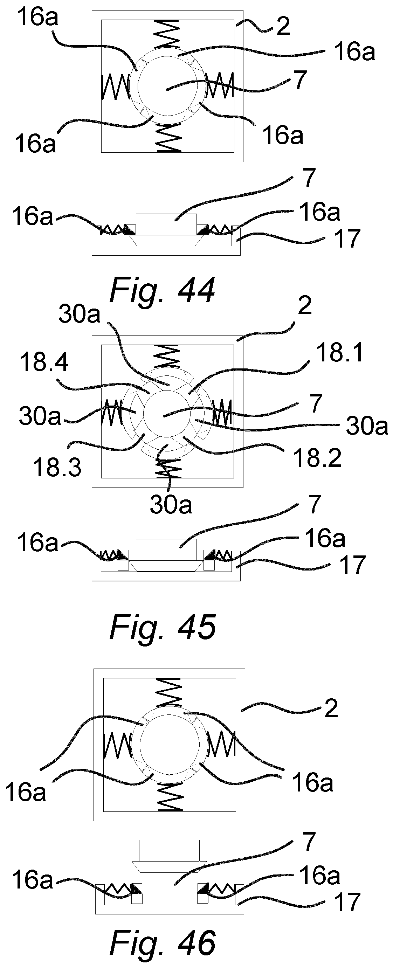

Solche Ausführungsformen sind im Folgenden später nochmals zu Fig. 41 bis Fig. 46 näher erläutert.

Eine weitere Variante mit Magneten betrifft eine mögliche Ausprägung, die ohne Freiräume und Auslöseformelemente auskommt, indem Magnete genutzt werden, die auf dem Stecker und dem Gegenhalter, **d.h.** der Buchse platziert sind. Dabei ist die Ausrichtung so gewählt, dass die Magnetpaarungen im verriegelten Zustand sich anziehen und hier für zusätzliche Stabilität, insbesondere gegen Verdrehung des Steckers, sorgen. Wird eine erste Kraftschwelle überschritten, kann der Strecker inklusive der inneren Magnete verdreht werden. Treffen die Magnete auf die äußeren, in dieser Stellung entgegengerichtet wirkenden Magnete, wirken sie abstoßend und drücken die Gegenhaltersegmente gegen schwächere Federkräfte radial zurück.

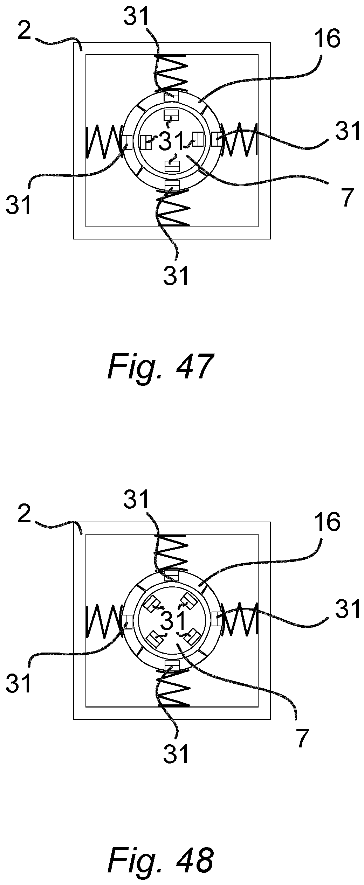

Solche Ausführungsformen sind im Folgenden später nochmals zu Fig. 47 bis Fig. 49 näher erläutert.

Analog zur soeben beschriebenen Variante kann in einer Abwandlung auch vorgesehen sein, dass nur ein Stabmagnet in der Mitte des Steckers angeordnet wird und zwei Segmente als Gegenhalter mit jeweils einem Magneten ausgebildet werden, wobei einmal "Nord" und einmal "Süd" nach innen zeigt

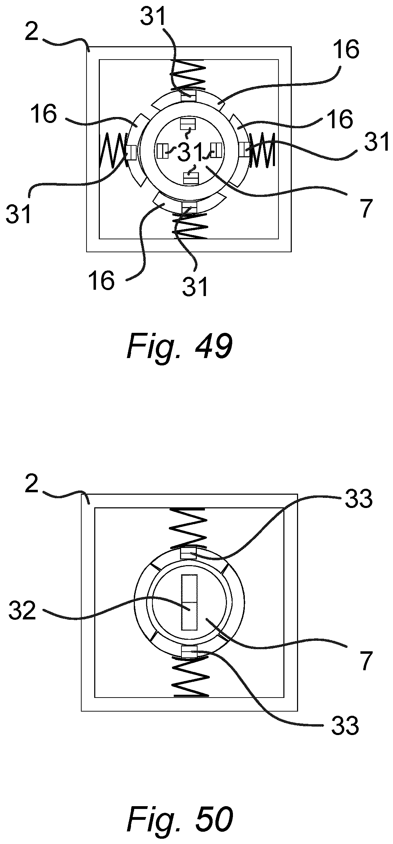

Eine solche Ausführungsformen ist im Folgenden später nochmals zu Fig. 50 näher erläutert.

Das Kopplungsmittel kann somit einen ersten Abstoßungsmagneten umfassen und das Gegenkopplungsmittel einen zweiten Abstoßungsmagneten umfassen, wobei der erste Abstoßungsmagnet und der zweite Abstoßungsmagnet relativ zueinander derart angeordnet sind, dass in einer Entriegelungsstellung von Kopplungsmittel relativ zum Gegenkopplungsmittel der erste Abstoßungsmagnet in Zusammenwirken mit dem zweiten Abstoßungsmagneten eine gegeneinander abstoßende Magnetkraft bewirkt, welche das am Kopplungsmittel verstellbar gelagerte Verriegelungselement in seine Entriegelungsstellung drückt.

Die Aufgabe wird auch gelöst durch ein System umfassend eine Robotervorrichtung, ein robotisches Eingabegerät und eine Verbindungsvorrichtung nach einem oder mehreren der beschriebenen Ausführungsformen und/oder Varianten, wobei das Kopplungsmittel mittels seines ersten Befestigungsabschnitts mit der Robotervorrichtung als erstem Gegenstand verbunden ist und das Gegenkopplungsmittel mittels seines zweiten Befestigungsabschnitts mit dem robotischen Eingabegerät als zweitem Gegenstand verbunden ist, wobei die Verbindungsvorrichtung nach einem der beschriebenen Ausführungsformen und/oder Varianten ausgebildet und eingerichtet ist, zum manuell wahlweisen Verbinden und Trennen des robotischen Eingabegeräts und der Robotervorrichtung.

Die Aufgabe wird auch gelöst durch ein System umfassend eine Robotervorrichtung, ein robotisches Eingabegerät (und eine Verbindungsvorrichtung nach einem oder mehreren der beschriebenen Ausführungsformen und/oder Varianten, wobei das Kopplungsmittel mittels seines ersten Befestigungsabschnitts mit dem robotischen Eingabegerät als erstem Gegenstand verbunden ist und das Gegenkopplungsmittel mittels seines zweiten Befestigungsabschnitts mit der Robotervorrichtung als zweitem Gegenstand verbunden ist, wobei die Verbindungsvorrichtung nach einem oder mehreren der beschriebenen Ausführungsformen und/oder Varianten ausgebildet und eingerichtet ist, zum manuell wahlweisen Verbinden und Trennen des robotischen Eingabegeräts und der Robotervorrichtung.

Wie bereits beschrieben ist ein Hauptmerkmal dieser Kopplungseinheit die Relativdrehung der Koppelpartner um die Füge und Löserichtung.

Bei Robotervorrichtungen, die üblicher Weise einen Roboterarm und eine Robotersteuerung umfassen, werden robotische Eingabegerät, sogenannte Bedienhandgeräte bzw. HMIs eingesetzt, um manuelle Eingaben machen zu können, welche die Robotersteuerung steuern oder programmieren, oder sogar den Roboterarm durch entsprechende Eingaben am Eingabegerät in einem Handfahrbetrieb bewegen zu können. Solche Eingabegerät haben neuerdings eine miniaturisierte Baugröße, so dass diese insbesondere mit einer Hand gehandhabt werden können.

So kann das Eingabegerät den einen Koppelpartner aufweisen und beispielsweise ein Glied des Roboterarms direkt den anderen Koppelpartner aufweisen, um das Eingabegerät lösbar direkt am Roboterarm ankoppeln zu können.

Doll eine Drehung des Eingabegeräts um beispielsweise 360 Grad ohne Entriegelung möglich sein, kann auch ein zusätzlicher externer Entriegelungsmechanismus zusätzlich installiert sein.

So können zusätzliche Auslösemechanismen zielführend sein, die in den Sonder-Koppelpartnern, wie beispielsweise das Eingabegerät direkt integriert sind und bei Betätigung entweder eine isolierte Rotation des Steckers durchführen oder die Gegenhaltersegmente radial nach außen ziehen, ohne dass der Stecker sich gedreht hat.

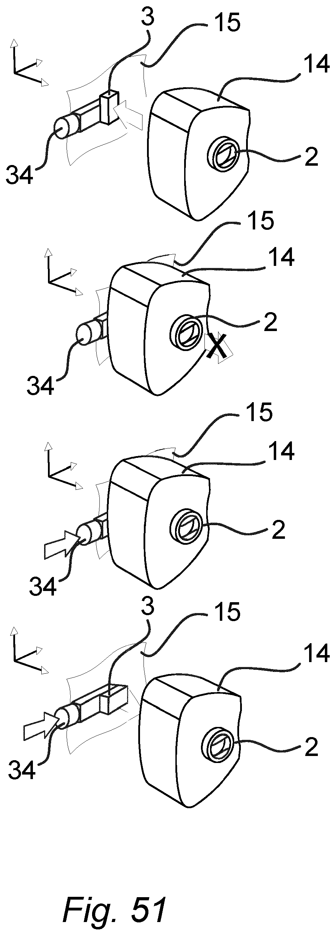

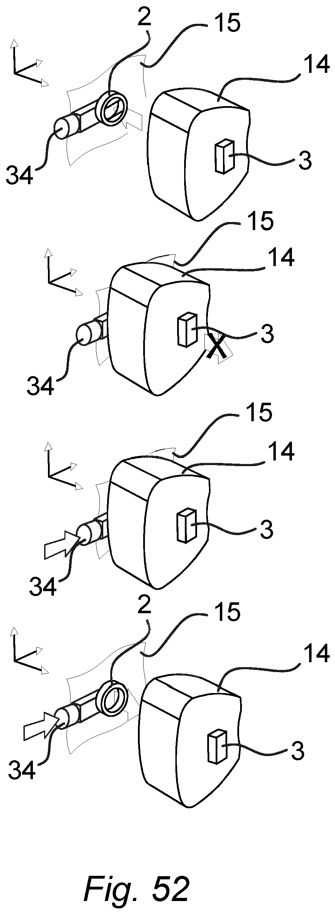

Solche Ausführungsformen sind im Folgenden später nochmals zu Fig. 51 und Fig. 52 näher erläutert.

Auch eine Variante, bei der das Eingabegerät selbst zusätzliche Entriegelungsbetätiger je Seite beinhaltet, ist möglich.

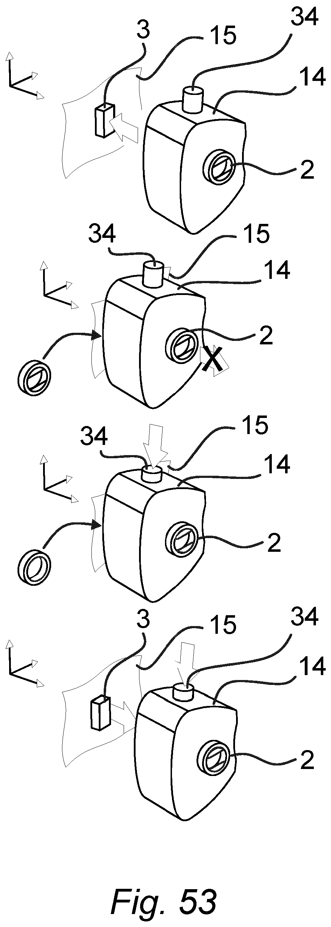

Eine solche Ausführungsform ist im Folgenden später nochmals zu Fig. 53 näher erläutert.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1 bis 7: verschiedene Ausführungsformen von Verbindungsvorrichtungen mit elasto-mechanisch zusammenwirkenden Verriegelungselementen und Gegenverriegelungselementen,
- Fig. 8 bis Fig. 19: verschiedene Ausführungsformen von Verbindungsvorrichtungen mit federelastisch zusammenwirkenden Verriegelungselementen und Gegenverriegelungselementen,
- Fig. 20 und Fig. 21: eine erste Variante einer Verbindungsvorrichtung mit eine haptischen Einrichtung, welche eine Entsperrstellung der Verbindungsvorrichtung haptisch rückmelden kann,
- Fig. 22 und Fig. 23: eine zweite Variante einer Verbindungsvorrichtung mit eine haptischen Einrichtung, welche eine Entsperrstellung der Verbindungsvorrichtung haptisch rückmelden kann,
- Fig. 24 und Fig. 25: eine dritte Variante einer Verbindungsvorrichtung mit eine haptischen Einrichtung, welche eine Entsperrstellung der Verbindungsvorrichtung haptisch rückmelden kann,
- Fig. 26 und Fig. 27: eine vierte Variante einer Verbindungsvorrichtung mit eine haptischen Einrichtung, welche eine Entsperrstellung der Verbindungsvorrichtung haptisch rückmelden kann,
- Fig. 28 und Fig. 29: eine fünfte Variante einer Verbindungsvorrichtung mit eine haptischen Einrichtung, welche eine Entsperrstellung der Verbindungsvorrichtung haptisch rückmelden kann,
- Fig. 30 bis Fig. 32: eine sechste Variante einer Verbindungsvorrichtung mit eine haptischen Einrichtung, welche eine Entsperrstellung der Verbindungsvorrichtung haptisch rückmelden kann,
- Fig. 33 bis Fig. 35: eine siebte Variante einer Verbindungsvorrichtung mit eine haptischen Einrichtung, welche eine Entsperrstellung der Verbindungsvorrichtung haptisch rückmelden kann,
- Fig. 36 bis Fig. 46: Ausführungsformen, bei denen die Entriegelung nicht durch "Freidrehen" in eine Stellung ohne Überdeckung von Sperrkörper und Gegenhalter erfolgt, sondern der Gegenhalter, insbesondere die Gegenhaltersegmente durch relatives Verdrehen des Steckers relativ zum Rahmen radial nach außen geöffnet werden,
- Fig. 47 bis Fig. 50: Ausführungsformen analog Fig. 36 bis Fig. 46, jedoch mit magnetisch wirkenden Steckern und Gegenhaltern,
- Fig. 51 bis Fig. 53: verschiedene Ausführungsformen in der Verwendung einer jeweiligen
- Fig. 54: Verbindungsvorrichtung zusammen mit einem robotischen Eingabegerät, und eine schematische Darstellung eines Systems umfassend eine Robotervorrichtung, ein robotisches Eingabegerät, weitere Endgeräte und eine jeweilige Verbindungsvorrichtung.

In der Fig. 1 und Fig. 2 ist eine grundlegende Ausführung einer erfindungsgemäßen Verbindungsvorrichtung 1 schematisch aufgezeigt. Die Fig. 1 zeigt die Verbindungsvorrichtung 1 dabei in einer Verrieglungsstellung und die Fig. 2 zeigt die Verbindungsvorrichtung 1 in einer Entriegelungsstellung.

Die Verbindungsvorrichtung 1 ist im Wesentlichen zweiteilig aufgebaut und umfasst ein Kopplungsmittel 2 und ein korrespondierendes Gegenkopplungsmittel 3.

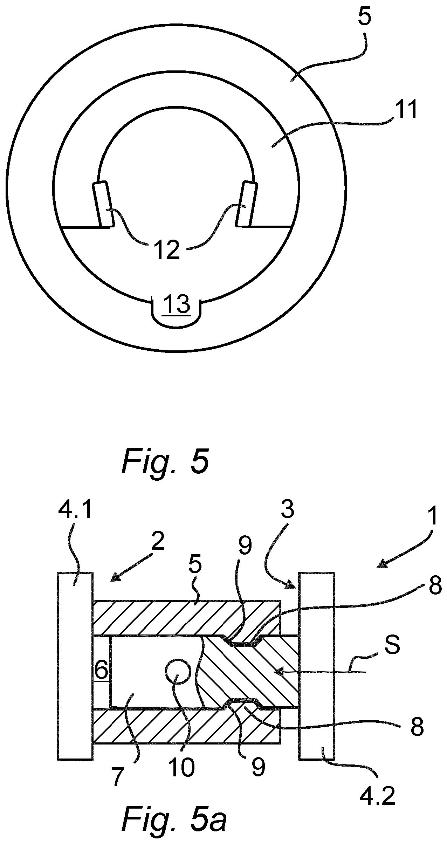

Das Kopplungsmittel 2 weist einen ersten Befestigungsabschnitt 4.1 zum Befestigen des Kopplungsmittels 2 an einem ersten Gegenstand auf. Das Kopplungsmittel 2 weist außerdem eine Buchse 5 mit einer Öffnung auf, über die ein Buchsenhohlraum 6 der Buchse 5 in einer axialen Steckrichtung S (Fig. 5a) zugänglich ist.

Das Gegenkopplungsmittel 3 weist einen zweiten Befestigungsabschnitt 4.2 zum Befestigen des Gegenkopplungsmittels 3 an einem zweiten Gegenstand auf. Das Gegenkopplungsmittel 3 weist außerdem einen zur Buchse 5 des Kopplungsmittels 2 korrespondierenden Stecker 7 mit einem in die Öffnung des Buchsenhohlraums 6 der Buchse 5 in der axialen Steckrichtung S (Fig. 5a) einsteckbaren Schaft auf.

Das Kopplungsmittel 2 weist wenigstens ein zwischen einer Verriegelungsstellung (Fig. 1) und einer Entriegelungsstellung (Fig. 2) verstellbar gelagertes Verriegelungselement 8 auf, das in seiner Verriegelungsstellung in den Buchsenhohlraum 6 der Buchse 5 hineinragt und in seiner Entriegelungsstellung den Buchsenhohlraum 6 der Buchse 5 freigibt.

Das Gegenkopplungsmittel 3 weist wenigstens einen in der Verriegelungsstellung des Verriegelungselements 8 der Buchse 5 formschlüssig zusammenwirkendes Gegenverriegelungselement 9 auf. Im Falle des vorliegenden Ausführungsbeispiel der Fig. 1 bis Fig. 5 wird das wenigstens eine Gegenverriegelungselement 9 von wenigstens einem Hinterschnitt in der Mantelfläche des Steckers 7 gebildet, hinter dem das wenigstens eine Verriegelungselement 8 des Kopplungsmittels 2 in der Verriegelungsstellung (Fig. 1) formschlüssig eingreift und in der Entriegelungsstellung (Fig. 2) aus dem Hinterschnitt herauspositioniert ist.

Der Buchsenhohlraum 6 der Buchse 5 und der zum Buchsenhohlraum 6 korrespondierende Schaft des Steckers 7 weisen aufeinander abgestimmte Querschnittskonturen auf, welche ein relatives Verdrehen von Kopplungsmittel 2 und Gegenkopplungsmittel 3 um eine zur Steckrichtung S parallelen Drehachse in einem verbundenen Zustand von Kopplungsmittel 2 und Gegenkopplungsmittel 3 erlauben.

Erfindungsgemäß weist das Gegenkopplungsmittel 3 wenigstens ein Entriegelungsmittel 10 auf, das ausgebildet ist, bei einem relativen Verdrehen von Kopplungsmittel 2 und Gegenkopplungsmittel 3 um die zur Steckrichtung S parallelen Drehachse das Verriegelungselement 8 des Kopplungsmittels 2 in einem vorgegebenen relativen Drehwinkelstellungsbereich von Kopplungsmittel 2 und Gegenkopplungsmittel 3 aus seiner Verriegelungsstellung (Fig. 1) in eine Entriegelungsstellung (Fig 2) zu bewegen, in der das Verriegelungselement 8 des Kopplungsmittels 2 und das Gegenverriegelungselement 9 des Gegenkopplungsmittels 3 außer Eingriff sind, so dass das Kopplungsmittel 2 und das Gegenkopplungsmittel 3 entgegen der Steckrichtung S voneinander trennbar sind. Im konkreten Ausführungsbeispiel der Fig. 1 bis Fig. 5 weist das Kopplungsmittel 2 genau zwei Verriegelungselemente 8 auf. Diese zwei Verriegelungselemente 8 sind gegenüberliegend angeordnet.

Das Entriegelungsmittel 10 des Gegenkopplungsmittels 3 kann wenigstens einen vom Schaft des Steckers 7 radial nach außen vorspringenden Fortsatz aufweisen, der ausgebildet ist, in einem ersten Drehwinkelstellungsbereich des Gegenkopplungsmittels 3 relativ zum Kopplungsmittel 2 das wenigstens eine Verriegelungselement 8 in die Entriegelungsstellung zu drücken, entsprechend Fig. 2, und in einem vom ersten Drehwinkelstellungsbereich verschiedenen zweiten Drehwinkelstellungsbereich des Gegenkopplungsmittels 3 relativ zum Kopplungsmittel 2 das Verriegelungselement 8 in seiner Verriegelungsstellung zu belassen, entsprechend Fig. 1, wobei das Verriegelungselement 8 in seine Verriegelungsstellung federnd vorgespannt ist und im ersten Drehwinkelstellungsbereich des Gegenkopplungsmittels 3 relativ zum Kopplungsmittel 2 das Verriegelungselement 8 durch den Fortsatz des Entriegelungsmittels 10 entgegen einer Federkraft in seine Entriegelungsstellung radial nach außen gedrückt wird. Die Federkraft wird im Falle der Ausführung gemäß Fig.1 und Fig. 2 von einem federelastischen Aufweiten des Kopplungsmittels 2, **d.h.** der Mantelwand der Buchse 5 erzeugt.

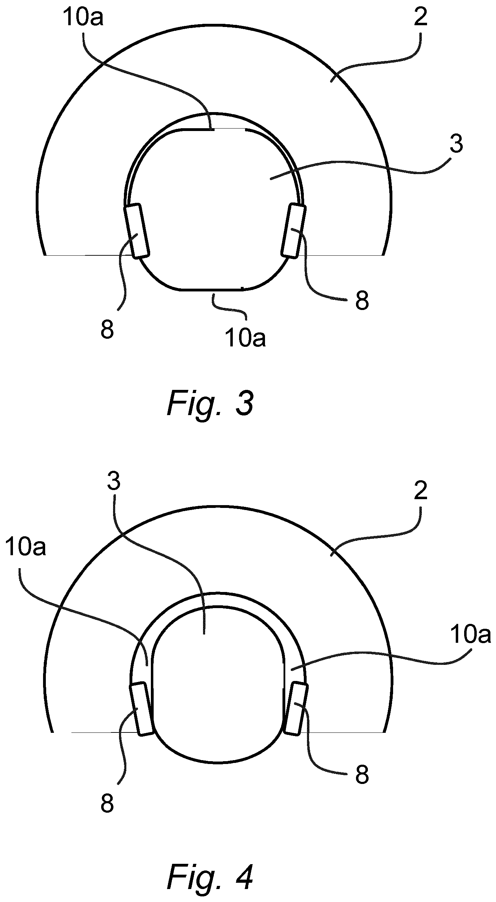

In der abgewandelten Ausführung gemäß Fig. 3 und Fig. 4 weist das Entriegelungsmittel 10 wenigstens eine sich axial entlang des Schaftes des Steckers 7 erstreckende Vertiefung 10a in der Mantelfläche des Schaftes auf, die ausgebildet ist, in einem ersten Drehwinkelstellungsbereich des Gegenkopplungsmittels 3 relativ zum Kopplungsmittel 2 mit dem radial nach innen in den Buchsenhohlraum 6 des Kopplungsmittels 2 vorspringenden Verriegelungselementen 8 zu fluchten, entsprechend Fig. 4, wobei in einem vom ersten Drehwinkelstellungsbereich verschiedenen zweiten Drehwinkelstellungsbereich des Gegenkopplungsmittels 3 relativ zum Kopplungsmittel 2 das Entriegelungsmittel 10 in radialer Richtung mit den Verriegelungselementen 8 überlappt, so dass in dieser Verriegelungsstellung, entsprechend Fig. 3, das Gegenkopplungsmittel 3 in axialer Richtung formschlüssig an dem Kopplungsmittel 2 gehalten ist. Die Vertiefungen 10a können von axial verlaufenden Nuten oder axial verlaufenden Abflachungen an der Mantelwand des Schaftes des Steckers 7 gebildet werden.

In einer Weiterbildung, wie in Fig. 5 aufgezeigt ist, kann eine zweite Stufe eingefügt werden, um für eine höhere Entkoppelungssicherheit zu sorgen. Die Buchse 5 hat im Einführbereich, in axialer Steckrichtung vor einem Gegenhalter 11 mit Schnapphaken 12 im Gehäuse eine Aussparung 13, wie in Fig. 5 dargestellt, oder mehrere Aussparungen 13 als zweite Stufe, und zwar verdreht zur Aufweite-Drehposition. Der Stecker 7 mit seiner Ausprägung, beispielsweise dem Entriegelungsmittel 10, kann nur in richtiger Orientierung zur Aussparung 13 in die Buchse 5 eingesetzt und verrastet werden. Für den Entkopplungsprozess der ersten Stufe muss der Stecker 7 zunächst auf Entsperrstellung verdreht werden (Fig. 2 oder Fig. 4), damit dieser den Gegenhalter 11 aufweitet bzw. die Verriegelungselementen 8 auseinandertreibt, und aus dem Schnapphaken bzw. den Gegenverriegelungselementen 9 herausgezogen werden kann. Der Stecker 7 muss weiterhin gezielt entgegen des Gegenhalters der Buchse 5 gezogen werden, da die Verrastung der ersten Stufe in jeder Drehposition wieder möglich ist. Anschließend muss der Stecker 7 weiter verdreht werden, damit die Ausprägung, beispielsweise das Entriegelungsmittel 10, passend zu der Aussparung 13 bzw. den Aussparungen 13 der Buchse 5 ausgerichtet ist. Nun kann der Stecker 7 vollständig entnommen werden.

Durch Kombinationen mit einer Rücklaufsperre und einzigartig ausgeprägten Aussparungen 13 und/oder Ausprägungen, kann ein Entkoppelungsprozess bis zu eine vollständige Umdrehung benötigen und bietet dadurch eine zusätzliche Entkoppelsicherheit.

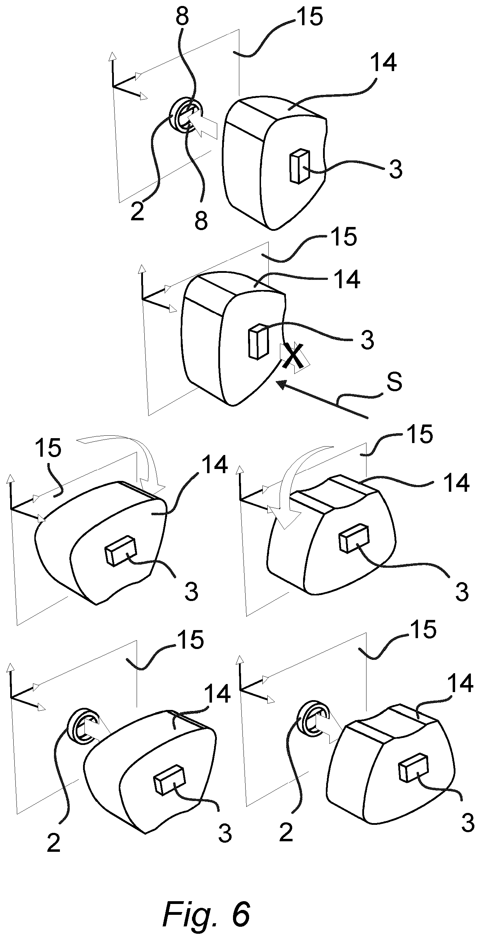

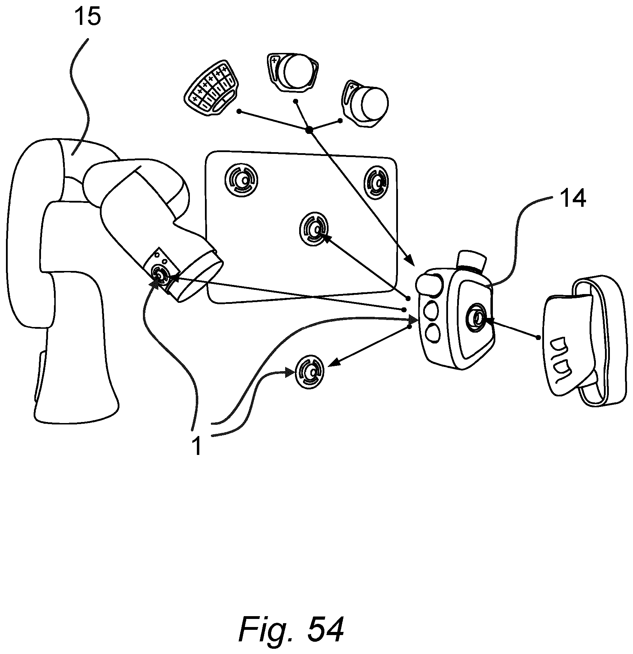

Die Fig. 6 illustriert das Ankoppeln und das Entkoppeln eines Kopplungsmittels 2 von dem Gegenkopplungsmittel 3, wobei das Gegenkopplungsmittel 3 beispielsweise an einem Eingabegerät 14 einer Robotervorrichtung 15 (Fig. 54) angeordnet ist und das Kopplungsmittel 2 an der Robotervorrichtung 15 selbst angeordnet sein kann. Zur besseren Veranschaulichung weist das Eingabegerät 14 an gegenüberliegenden Seiten zwei identisch ausgebildet Gegenkopplungsmittel 3 auf. Dies ermöglicht es einerseits in der Anwendung, dass das Eingabegerät 14 entweder linksseitig oder rechtsseitig an die Robotervorrichtung 15 angekoppelt werden kann. Andererseits veranschaulicht das gegenüberliegende Gegenkopplungsmittel 3 auch die Form, Größe und Orientierung des gegenüberliegenden gleichartigen Gegenkopplungsmittels 3, das in der gewählten perspektivischen Darstellung eigentlich nicht erkennbar ist, aber mit dem sichtbaren Gegenkopplungsmittel 3 zusammenwirkt. In der oberen Darstellung ist erkennbar, dass das Gegenkopplungsmittel 3 zwischen den beiden Verriegelungselementen 8 in Art einer Schnapp-Rastverbindung einrasten kann, obwohl sich die Verriegelungselemente 8 in ihren Verriegelungsstellungen befinden. Ein axiales Abziehen entgegen der Steckrichtung S ist im gekoppelten Zustand in dieser Orientierung des Eingabegeräts 14 nicht möglich, wie der durchgekreuzte Pfeil in der zweiten Darstellung von oben erkennbar ist. Wird das Eingabegerät 14 entweder im Uhrzeigersinn (linke mittlere Darstellung) oder gegen den Uhrzeigersinn (rechte mittlere Darstellung) gedreht, so erhält das Gegenkopplungsmittel 3 die passende Orientierung, um die Verriegelungselemente 8 in axialer Richtung entgegen der Steckrichtung S passieren zu können, wodurch das Eingabegerät 14 von der Robotervorrichtung 15 wieder getrennt werden kann.

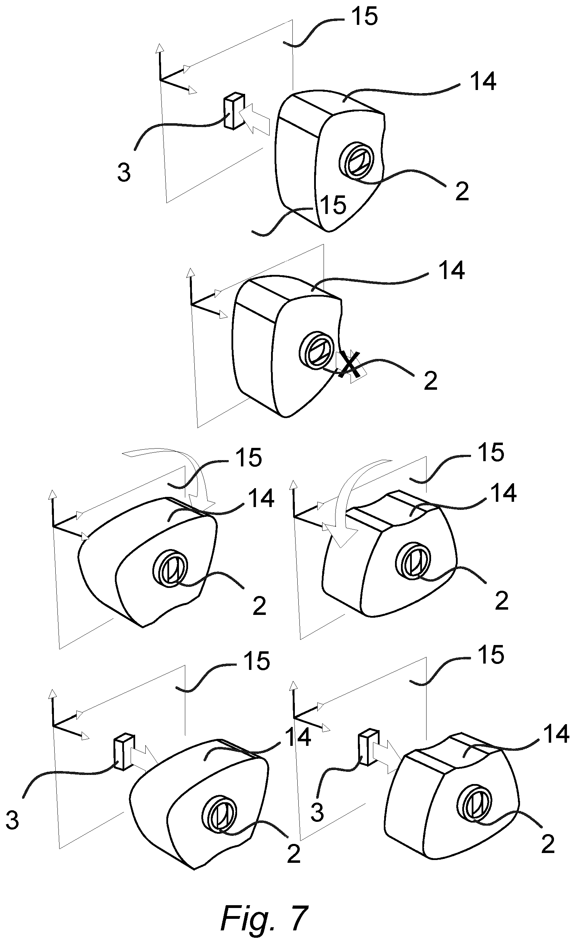

Die Fig. 7 zeigt ein analoges Beispiel zur Fig. 6, wobei jedoch das Kopplungsmittel 2 und das Gegenkopplungsmittel 3 vertauscht sind, d.h. das Eingabegerät 14 weist nun die Kopplungsmittel 2 auf und die Robotervorrichtung 15 weist das Gegenkopplungsmittel 3 auf.

Die Fig. 8 bis Fig. 13 zeigen, ein Paar von Gegenhaltern 16 als Verriegelungselemente 8, das gefedert in einem Rahmen 17 so geführt ist, dass diese von einem Sperrkörper 18 des Steckers 7 bei Einschub entlang der Drehachse D seitlich zurückweichen können und ein Eintauchen des Steckers 7 in den Rahmen 17 ermöglichen. In dieser Ausprägungsform sind die Sperrkörper 18 nicht umlaufend am Stecker 7 ausgeprägt, sondern besitzen Freibereiche 19.

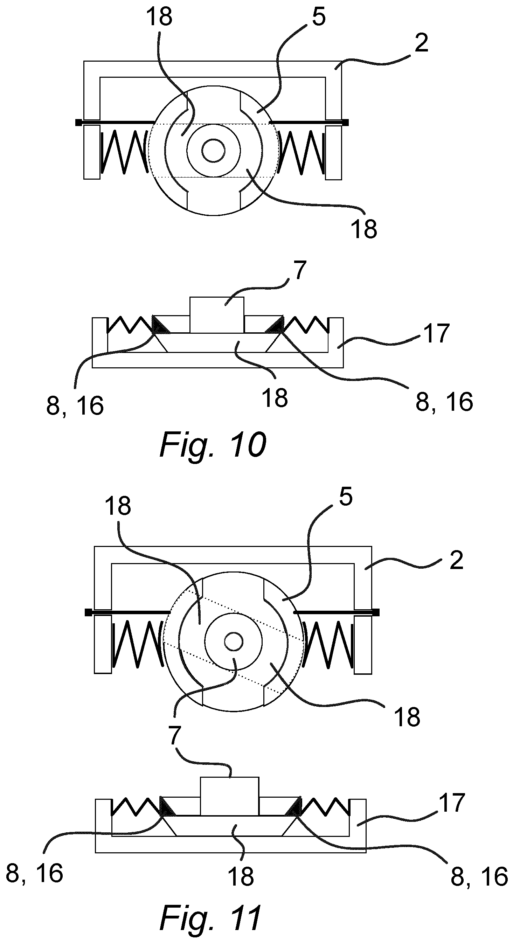

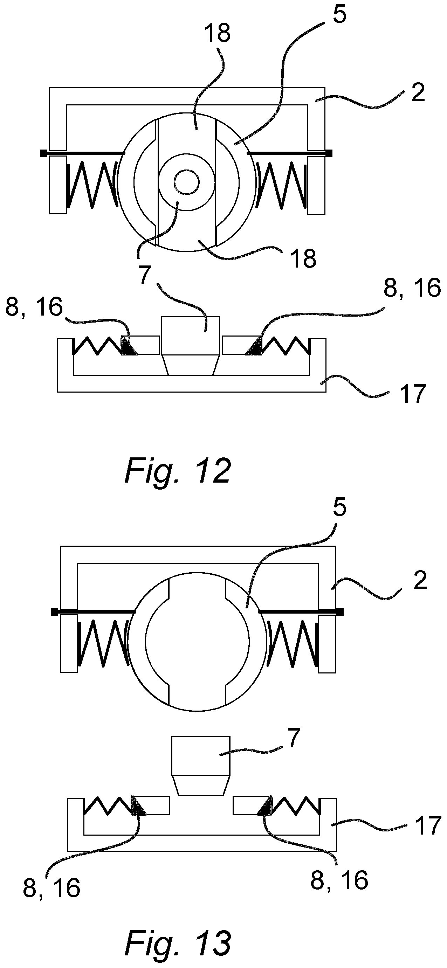

Im verriegelten Zustand wird der Sperrkörper 18 bzw. die Sperrkörper 18 an den Segmenten der Gegenhalter 16 in Axial- und Radialrichtung formschlüssig festgehalten (Fig. 10). Eine Drehung des Steckers um die Drehachse ermöglicht eine weiterhin verriegelte Winkelstellung der beiden Koppelpartner (Fig. 11). Erst bei Überschreitung eines Entkoppelwinkels, beispielsweise wie dargestellt von 90 Grad (Fig. 12), verschwindet die Überdeckung, da die Sperrkörper 18 ab diesem Entkoppelwinkel zwischen den Gegenhaltern 16 liegt. Der Stecker 7 kann so nach einer entsprechenden Drehung wieder in Axialrichtung entfernt werden (Fig. 13).

In einer speziellen Abwandlung gemäß Fig. 14 bis Fig. 16 werden Gegenhalter 16, Feder und Führung in ein Element zusammengefasst, dass beispielsweise als elastisch biegbare Biegestange 19 oder Biegestangen 19 ausgeführt werden kann, die in dem Rahmen 17 gelagert sind.

In einer anderen speziellen Abwandlung gemäß Fig. 17 bis Fig. 19 ist eine Umkehrung der rückweichenden und federnden Sperrelemente 20 von Rahmen 17 auf den Stecker 7 realisiert.

So können die rückweichenden und federnden Sperrelemente 20 an dem Stecker 7 vorgesehen sein und die starren Gegenhalter 21 an dem Rahmen 17 vorgesehen sein.

Im Folgenden werden haptische Einrichtungen näher erläutert.

In einer ersten Variante gemäß Fig. 20 und Fig. 21 kann vorgesehen sein, dass der Sperrkörper 18 in seine Entsperrposition (Fig. 21) gedreht wird, ein gefederter Formkörper 22 dann in einen angeschrägten Ausschnitt 23 im Stecker 7 einrastet und den Strecker 7 in dieser Position arretiert.

Der Formkörper 22 bildet zusammenwirkend mit dem Ausschnitt 23 eine Rasteinrichtung 35.

In einer der Entriegelungsstellung entsprechenden relativen Winkelstellung von Kopplungsmittel 2 zu Gegenkopplungsmittel 3 kann somit der Stecker 7 des Gegenkopplungsmittels 3 mittels der Rasteinrichtung 35 relativ zur Buchse 5 des Kopplungsmittels 2 kraftschlüssig und/oder formschlüssig in seiner entriegelbaren Drehstellung stabilisiert gehalten sein.

Die Rasteinrichtung 35 kann ein am Kopplungsmittel 2 in radialer Richtung in den Buchsenhohlraum 6 vorspringend vorgespannter Raststift 22a (Formkörper 22) umfassen, welcher in der Entriegelungsstellung (Fig. 21) in eine zum Raststift 22a des Gegenkopplungsmittels 3 korrespondierende Vertiefung 23a (Ausschnitt 23) in dem Schaft des Steckers 7 mechanisch einrastet.

Ist dieser Ausschnitt 23 dabei linear wie eine Nut entlang der Drehachsrichtung ausgebildet, kann der Stecker 7 kraftfrei entnommen werden. Ist dieser Ausschnitt dabei lokal, punktförmig oder zylindrisch, wie ein Loch ausgeprägt, muss der Stecker 7 zunächst gegen die Federkraft gezogen werden, um entnommen werden zu können.

Der Ausschnitt 23 kann auf dem Sperrköper 18 ausgeführt oder an beliebiger Stelle auf dem Stecker 7 ausgeführt werden. Ebenso ist stets eine Umkehrung von Ausschnitt 23 und Formkörper 22 möglich, **d.h.** der Ausschnitt 23 kann wahlweise an dem Stecker 7 bzw. an der Buchse 5 angeordnet sein, und demgemäß der Formkörper 22 an der Buchse 5 bzw. dem Stecker 7 als komplementäres Teil angeordnet sein. Eine solche Variante ermöglicht eine Verdrehung in die Entsperrposition, aber auch darüber hinaus und auch wieder zurück.

In einer zweiten Variante gemäß Fig. 22 und Fig. 23 kann vorgesehen sein, dass bei dem haptischen Mittel ein Formschluss der Elemente von Ausschnitt 23 und Formkörper 22 realisiert ist, im Gegensatz zur ersten Variante gemäß Fig. 20 und Fig. 21, bei der ein Kraftschluss realisiert ist. Der Ausschnitt 23 muss im Falle der zweiten Variante als eine in Drehachsrichtung gerichtete Nut ausgeprägt sein. Die zweite Variante ermöglicht nur eine Verdrehung in die Entsperrposition aber keine Rück- oder Weiterdrehung. Hier muss erst eine vollständige Entnahme des Stecker 7 erfolgen, bevor dies Verbindung durch Wiedereinstecken neu hergestellt werden kann.

Eine dritte Variante gemäß Fig. 24 und Fig. 25 ist mit der ersten Variante gemäß Fig. 20 und Fig. 21 und einem lokalen Ausschnitt 23 vergleichbar, jedoch mit dem Unterschied, dass hier ein oder mehrere Magnetpaare 24 die Mittenarretierung übernehmen, statt einer mechanisch kraftschlüssigen Verbindung. Der Nutzer spürt hierbei, wenn er in die Nähe der Stellung kommt, in der sich die Magnete 24 anziehend gegenüberstehen. Die Magnete 24 können radial oder in ähnlicher Position axial zur Drehachsrichtung angeordnet sein. Dabei können die Magnete 24 zur endgültigen Entkopplung entweder durch Scherung oder durch Zug voneinander getrennt werden.

Die Rasteinrichtung 35 kann demgemäß ein am Kopplungsmittel 2 angebrachten ersten Magneten 24.1 umfassen, welcher in der Entriegelungsstellung mit einem am Gegenkopplungsmittel 3 angeordneten zweiten Magneten 24.2 magnetisch zusammenwirkt, um das Gegenkopplungsmittel 3 in der Entriegelungsstellung relativ zum Kopplungsmittel 2 in seiner momentanen Drehwinkelstellung zu halten.

In einer vierten Variante gemäß Fig. 26 und Fig. 27 wird der Stecker 7 durch die Magnetanordnung 24 sowohl in der Entsperrstellung zentriert als auch eine charakteristische Überschreitungskraft erzeugt, wenn der Stecker 7 um einen Winkelbetrag aus der Entsperrstellung verdreht wird. Diese Lösung stellt insoweit ein bi-stabiles System dar.

Das Kopplungsmittel 2 kann demgemäß wenigstens einen ersten Abstoßungsmagneten 24a umfassen und das Gegenkopplungsmittel 3 einen zweiten Abstoßungsmagneten 24b umfassen, wobei der wenigstens eine erste Abstoßungsmagnet 24a und der zweite Abstoßungsmagnet 24b relativ zueinander derart angeordnet sind, dass in einer Entriegelungsstellung von Kopplungsmittel 2 relativ zum Gegenkopplungsmittel 3 der wenigstens eine erste Abstoßungsmagnet 24a in Zusammenwirken mit dem zweiten Abstoßungsmagneten 24b eine gegeneinander abstoßende Magnetkraft bewirkt, welche das am Kopplungsmittel 2 verstellbar gelagerte Verriegelungselement 8 in seine Entriegelungsstellung (Fig. 27) drückt. Im Falle des dargestellten Ausführungsbeispiels weist das Kopplungsmittel 2 zwei Abstoßungsmagnete 24a auf.

In einer fünften Variante gemäß Fig. 28 und Fig. 29 wird der Stecker 7 mit dem Sperrkörper 18 durch zusätzliche Sperrelemente 25 an den Gegenhaltersegmenten in der Stellung der Entsperrstellung gehalten, sobald er die Sperrelemente, d.h. die Gegenhalter 16 überfahren hat. Diese fünfte Variante ermöglicht nur eine Verdrehung in die Entsperrstellung, aber keine Rück- oder Weiterdrehung. Hier muss erst eine vollständige Entnahme des Steckers 7 erfolgen, bevor dies Verbindung durch Wiedereinstecken neu hergestellt wird.

Der Nutzer spürt einen definierten Kraftaufwand beim Überwinden der Sperrelemente, d.h. der Gegenhalter 16. Die Sperrelemente, d.h. die Gegenhalter 16 können in einer Abwandlung auch Teil des Rahmens 17 sein.

In einer sechsten Variante gemäß Fig. 30 bis Fig. 32 wird der Stecker 7 mit dem Sperrkörper 18 durch die Flanken der Gegenhalter 16 in der Entsperrstellung gehalten, sobald diese erreicht wird. Dies wird erreicht, indem der Stecker 7 mit seinem Sperrkörper 18 ein elastisches Federelement 26 im Rahmen 17 überfährt, welches ihn leicht anhebt und nach außen verschiebt.

Diese sechste Variante ermöglicht auch nur eine Verdrehung in die Entsperrstellung, aber keine Rück- oder Weiterdrehung. Auch hier muss erst eine vollständige Entnahme des Steckers erfolgen, bevor dies Verbindung durch Wiedereinstecken neu hergestellt wird. Im Unterschied zur zweiten und fünften Variante kann eine Verbindung auch wieder hergestellt werden, indem der Stecker 7 entgegen der Kraft des elastischen Federelements 26 auf Niveau des Rahmens 17 heruntergedrückt und dann wieder in die Verriegelungsstellung zurückgedreht wird.

Der Nutzer spürt einen definierten Kraftaufwand beim Überwinden des Federelements 26. Das Federelement 26 kann in einer Abwandlung auch Teil des Steckers 7, insbesondere des Sperrkörpers 18 sein.

Eine siebte Variante gemäß Fig. 33 bis Fig. 35 basiert vom Prinzip her auf der sechsten Variante gemäß Fig. 30 bis Fig. 32, mit dem Unterschied, dass die mechanischen Federelement 26 ersetzt sind, durch Magnetpaare 27, die insbesondere derart angeordnet sind, dass sie auf einer abstoßenden Wirkung funktionieren.

In einer weiteren Art von Ausführungsformen gemäß Fig. 36 bis Fig. 40 erfolgt die Entriegelung nicht durch "Freidrehen" in eine Stellung ohne Überdeckung von Sperrkörper 18 und Gegenhalter 16, sondern der Gegenhalter 16, insbesondere die Gegenhaltersegmente werden durch relatives Verdrehen des Steckers 7 relativ zum Rahmen 17 radial nach außen geöffnet, bis der Stecker 7 entgegen der Steckrichtung S entfernt werden kann.

Diese Art von Ausführungsform besitzt beispielsweise vier Segmente 28 als Gegenhalter 16, die jeweils mindestens einseitig insbesondere beidseitig Formelemente, insbesondere Formschrägen besitzen. Der Stecker 7 besitzt beispielsweise einen durchgängigen Sperrkörper 18, der von den Gegenhaltern 16, d.h. von en vier Segmenten 28 formschlüssig gehalten wird. Zudem besitzt der Stecker 7 auf Höhe der Gegenhalter 16 Auslöseelemente 29, die sich im verriegelten Zustand in den freien Taschen 30 zwischen den Segmenten 28 befinden. Eine Verdrehung bewirkt einen Kontakt und ein geführtes Aufdrücken der Segmente 28. Die Größe der Taschen 30 im Verhältnis zu der Größe der Auslöseelemente 29 definiert den Entriegelungszeitpunkt. Ist das Verhältnis klein, erfolgt bereits bei kleiner Relativdrehung die Auslösung. Ist das Verhältnis groß, ist es anderes herum und der Stecker 7 bleibt in einem größeren Winkelbereich gekoppelt.

Eine weitere Art von Ausführungsformen gemäß Fig. 41 bis 46 ist vergleichbar mit der Ausführungsform gemäß Fig. 36 bis Fig. 40, jedoch mit dem Unterschied, dass die Funktion der Auslöseelemente 29 hier von segmentierten Sperrkörpern 18.1, 18.2, 18.3 und 18.4 und deren Flanken übernommen wird, die bei Verdrehung auf Formelemente von Gelenkhaltersegmenten 16a treffen. Im verriegelten Zustand tauchen die segmentierten Sperrkörper 18.1, 18.2, 18.3 und 18.4 in Hohlräume unter die Gelenkhaltersegmente 16a ein. Ein notwendiger Freiraum 30a ist zwischen den segmentierten Sperrkörpern 18.1, 18.2, 18.3 und 18.4 ausgebildet.

Eine weitere Variante gemäß Fig. 47 bis 49 mit Magneten 31 betrifft eine mögliche Ausprägung, die ohne Freiräume 30a und Auslöseformelemente auskommt, indem Magnete 31 genutzt werden, die auf dem Stecker 7 und dem Gegenhalter 16, d.h. der Buchse 2 platziert sind. Dabei ist die Ausrichtung so gewählt, dass die Paare der Magnete 31 im verriegelten Zustand sich anziehen und hier für zusätzliche Stabilität, insbesondere gegen Verdrehung des Steckers 7, sorgen. Wird eine erste Kraftschwelle überschritten, kann der Strecker 7 inklusive der inneren Magnete 31 verdreht werden. Treffen die Magnete 31 auf die äußeren, in dieser Stellung entgegengerichtet wirkenden Magnete 31, wirken sie abstoßend und drücken die Gegenhaltersegmente gegen schwächere Federkräfte radial zurück.

Analog zur soeben beschriebenen Variante kann in einer Abwandlung gemäß Fig. 50 auch vorgesehen sein, dass nur ein Stabmagnet 32 in der Mitte des Steckers 7 angeordnet wird und zwei Segmente als Gegenhalter 16 mit jeweils einem Magneten 33 ausgebildet werden, wobei einmal "Nord" und einmal "Süd" nach innen zeigen.

Die Fig. 51 illustriert, wie das Gegenkopplungsmittel 3 mit einer manuellen Betätigungseinrichtung 34 versehen sein kann, über die, alternativ oder ergänzend zu einem Entriegelungsmittel 10, das durch Drehen von Kopplungsmittel 2 und Gegenkopplungsmittel 3 aktiviert wird, sodass das wenigstens eine Verriegelungselement 8 des Kopplungsmittels 2 und das wenigstens eine Gegenverriegelungselement 9 des Gegenkopplungsmittels 3 außer Eingriff gebracht werden können.

Die Fig. 52 illustriert, wie das Kopplungsmittel 2 mit einer manuellen Betätigungseinrichtung 34 versehen sein kann, über die, alternativ oder ergänzend zu einem Entriegelungsmittel 10, das durch Drehen von Kopplungsmittel 2 und Gegenkopplungsmittel 3 aktiviert wird, sodass das wenigstens eine Verriegelungselement 8 des Kopplungsmittels 2 und das wenigstens eine Gegenverriegelungselement 9 des Gegenkopplungsmittels 3 außer Eingriff gebracht werden können.

Die Fig. 53 illustriert, wie das Eingabegerät 14 mit einer manuellen Betätigungseinrichtung 34 versehen sein kann, über die, alternativ oder ergänzend zu einem Entriegelungsmittel 10, das durch Drehen von Kopplungsmittel 2 und Gegenkopplungsmittel 3 aktiviert wird, sodass das wenigstens eine Verriegelungselement 8 des Kopplungsmittels 2 und das wenigstens eine Gegenverriegelungselement 9 des Gegenkopplungsmittels 3 außer Eingriff gebracht werden können. Die Fig. 54 illustriert eine schematische Darstellung eines Systems umfassend eine Robotervorrichtung 15, ein robotisches Eingabegerät 14, weitere Endgeräte und eine jeweilige Verbindungsvorrichtung 1.

## Patentansprüche

1. Verbindungsvorrichtung (1) zum mechanisch formschlüssigen Verbinden eines ersten Gegenstands mit einem zweiten Gegenstand, aufweisend:
- ein Kopplungsmittel (2) mit einem ersten Befestigungsabschnitt (4.1) zum Befestigen des Kopplungsmittels (2) an dem ersten Gegenstand, mit einer Buchse (5) mit einer Öffnung über die ein Buchsenhohlraum (6) der Buchse (5) in einer axialen Steckrichtung (S) zugänglich ist, und wenigstens einem zwischen einer Verriegelungsstellung und einer Entriegelungsstellung verstellbar gelagertes Verriegelungselement (8), das in seiner Verriegelungsstellung in den Buchsenhohlraum (6) der Buchse (5) hineinragt und in seiner Entriegelungsstellung den Buchsenhohlraum (6) der Buchse (5) freigibt,
- ein Gegenkopplungsmittel (3) mit einem zweiten Befestigungsabschnitt (4.2) zum Befestigen des Gegenkopplungsmittels (3) an dem zweiten Gegenstand, mit einem zur Buchse (5) des Kopplungsmittels (2) korrespondierenden Stecker (7) mit einem in die Öffnung des Buchsenhohlraums (6) der Buchse (5) in der axialen Steckrichtung (S) einsteckbaren Schaft, und wenigstens einem in der Verriegelungsstellung des Verriegelungselements (8) der Buchse (5) formschlüssig zusammenwirkendes Gegenverriegelungselement (9),
**dadurch gekennzeichnet, dass**
- der Buchsenhohlraum (6) der Buchse (5) und der zum Buchsenhohlraum (6) korrespondierende Schaft des Steckers (7) aufeinander abgestimmte Querschnittskonturen aufweisen, welche ein relatives Verdrehen von Kopplungsmittel (2) und Gegenkopplungsmittel (3) um eine zur Steckrichtung (S) parallelen Drehachse in einem verbundenen Zustand von Kopplungsmittel (2) und Gegenkopplungsmittel (3) erlauben,
- des Weiteren aufweisend ein am Gegenkopplungsmittel (3) angeordnetes Entriegelungsmittel (10), das ausgebildet ist, bei einem relativen Verdrehen von Kopplungsmittel (2) und Gegenkopplungsmittel (3) um die zur Steckrichtung (S) parallelen Drehachse das Verriegelungselement (8) des Kopplungsmittels (2) in einem vorgegebenen relativen Drehwinkelstellungsbereich von Kopplungsmittel (2) und Gegenkopplungsmittel (3) aus seiner Verriegelungsstellung in eine Entriegelungsstellung zu bewegen, in der das Verriegelungselement (8) des Kopplungsmittels (2) und das Gegenverriegelungselement (9) des Gegenkopplungsmittels (3) außer Eingriff sind, so dass das Kopplungsmittel (2) und das Gegenkopplungsmittel (3) entgegen der Steckrichtung (S) voneinander trennbar sind.

2. Verbindungsvorrichtung nach Anspruch 1, **dadurch gekennzeichnet, dass** das Entriegelungsmittel (10) wenigstens einen vom Schaft des Steckers (7) radial nach außen vorspringenden Fortsatz aufweist, der ausgebildet ist, in einem ersten Drehwinkelstellungsbereich des Gegenkopplungsmittels (3) relativ zum Kopplungsmittel (2) das Verriegelungselement (8) in die Entriegelungsstellung zu drücken und in einem vom ersten Drehwinkelstellungsbereich verschiedenen zweiten Drehwinkelstellungsbereich des Gegenkopplungsmittels (3) relativ zum Kopplungsmittel (2) das Verriegelungselement (8) in seiner Verriegelungsstellung zu belassen, wobei das Verriegelungselement in seine Verriegelungsstellung federnd vorgespannt ist und im ersten Drehwinkelstellungsbereich des Gegenkopplungsmittels (3) relativ zum Kopplungsmittel (2) das Verriegelungselement (8) durch den Fortsatz des Entriegelungsmittels (10) entgegen einer Federkraft in seine Entriegelungsstellung radial nach außen gedrückt wird.

3. Verbindungsvorrichtung nach Anspruch 1, **dadurch gekennzeichnet, dass** das Entriegelungsmittel (10) wenigstens eine sich axial entlang des Schaftes des Steckers (7) erstreckende Vertiefung (10a) in der Mantelfläche des Schaftes aufweist, die ausgebildet ist, in einem ersten Drehwinkelstellungsbereich des Gegenkopplungsmittels (3) relativ zum Kopplungsmittel (2) mit dem radial nach innen in den Buchsenhohlraum (6) des Kopplungsmittels (2) vorspringenden Verriegelungselement (8) zu fluchten, wobei in einem vom ersten Drehwinkelstellungsbereich verschiedenen zweiten Drehwinkelstellungsbereich des Gegenkopplungsmittels (3) relativ zum Kopplungsmittel (2) das Entriegelungsmittel (10) in radialer Richtung mit dem Verriegelungselement (8) überlappt, so dass in dieser Verriegelungsstellung das Gegenkopplungsmittel (3) in axialer Richtung formschlüssig an dem Kopplungsmittel (2) gehalten ist.

4. Verbindungsvorrichtung nach einem der Ansprüche 1 bis 3, **dadurch gekennzeichnet, dass** das Gegenkopplungsmittel (3) über einen Freilauf an das Kopplungsmittel (2) angekoppelt ist, derart, dass ein relatives Drehen des Gegenkopplungsmittels (3) und des Kopplungsmittels (2) gegeneinander nur in eine Drehrichtung möglich ist.

5. Verbindungsvorrichtung nach einem der Ansprüche 1 bis 4, **gekennzeichnet durch** eine Zwischenebene, in welche das Gegenverriegelungselement (9) des Gegenkopplungsmittel (3) eingeführt wird, wenn das Gegenkopplungsmittel (3) von dem Kopplungsmittel (2) entgegen der Steckrichtung (S) bewegt wird, um in der Entriegelungsstellung das Gegenkopplungsmittel (3) von dem Kopplungsmittel (2) zu trennen, wobei die Zwischenebene formschlüssig wirkende Rückhaltemittel aufweist, welche ein weiteres Trennen des Gegenkopplungsmittels (3) von dem Kopplungsmittel (2) über die Zwischenebene hinweg zunächst verhindert und erst nach einem zusätzlichen Drehen des Gegenkopplungsmittels (3) relativ zum Kopplungsmittel (2) um einen weiteren Drehwinkel zulässt.

6. Verbindungsvorrichtung nach einem der Ansprüche 1 bis 5, **dadurch gekennzeichnet, dass** in einer der Entriegelungsstellung entsprechenden relativen Winkelstellung von Kopplungsmittel (2) zu Gegenkopplungsmittel (3) der Stecker (7) des Gegenkopplungsmittels (3) mittels einer Rasteinrichtung (35) relativ zur Buchse (5) des Kopplungsmittels (2) kraftschlüssig und/oder formschlüssig in seiner entriegelbaren Drehstellung stabilisiert gehalten ist.

7. Verbindungsvorrichtung nach Anspruch 6, **dadurch gekennzeichnet, dass** die Rasteinrichtung (35) ein am Kopplungsmittel (2) in radialer Richtung in den Buchsenhohlraum (6) vorspringend vorgespannter Raststift (22a) umfasst, welcher in der Entriegelungsstellung in eine zum Raststift (22a) des Gegenkopplungsmittels (3) korrespondierende Vertiefung (23a) in dem Schaft des Steckers (7) mechanisch einrastet.

8. Verbindungsvorrichtung nach Anspruch 6, **dadurch gekennzeichnet, dass** die Rasteinrichtung ein am Kopplungsmittel (2) angebrachten ersten Magneten (24.1) umfasst, welcher in der Entriegelungsstellung mit einem am Gegenkopplungsmittel (3) angeordneten zweiten Magneten (24.2) magnetisch zusammenwirkt, um das Gegenkopplungsmittel (3) in der Entriegelungsstellung relativ zum Kopplungsmittel (2) in seiner momentanen Drehwinkelstellung zu halten.

9. Verbindungsvorrichtung nach einem der Ansprüche 1 bis 8, **dadurch gekennzeichnet, dass** das Kopplungsmittel (2) wenigstens einen ersten Abstoßungsmagneten (24a) umfasst und das Gegenkopplungsmittel (3) einen zweiten Abstoßungsmagneten (24b) umfasst, wobei der erste Abstoßungsmagnet (24a) und der zweite Abstoßungsmagnet (24b) relativ zueinander derart angeordnet sind, dass in einer Entriegelungsstellung von Kopplungsmittel (2) relativ zum Gegenkopplungsmittel (3) der wenigstens eine erste Abstoßungsmagnet (24a) in Zusammenwirken mit dem zweiten Abstoßungsmagneten (24b) eine gegeneinander abstoßende Magnetkraft bewirkt, welche das am Kopplungsmittel (2) verstellbar gelagerte Verriegelungselement (8) in seine Entriegelungsstellung drückt.

10. System umfassend eine Robotervorrichtung (15), ein robotisches Eingabegerät (14) und eine Verbindungsvorrichtung (1) nach einem der Ansprüche 1 bis 9, **dadurch gekennzeichnet, dass** das Kopplungsmittel (2) mittels seines ersten Befestigungsabschnitts (4.1) mit der Robotervorrichtung (15) als erstem Gegenstand verbunden ist und das Gegenkopplungsmittel (3) mittels seines zweiten Befestigungsabschnitts (4.2) mit dem robotischen Eingabegerät (14) als zweitem Gegenstand verbunden ist, wobei die Verbindungsvorrichtung (1) nach einem der Ansprüche 1 bis 9 ausgebildet und eingerichtet ist, zum manuell wahlweisen Verbinden und Trennen des robotischen Eingabegeräts (14) und der Robotervorrichtung (15).

11. System umfassend eine Robotervorrichtung (15), ein robotisches Eingabegerät (14) und eine Verbindungsvorrichtung (1) nach einem der Ansprüche 1 bis 9, **dadurch gekennzeichnet, dass** das Kopplungsmittel (2) mittels seines ersten Befestigungsabschnitts (4.1) mit dem robotischen Eingabegerät (14) als erstem Gegenstand verbunden ist und das Gegenkopplungsmittel (3) mittels seines zweiten Befestigungsabschnitts (4.2) mit der Robotervorrichtung (15) als zweitem Gegenstand verbunden ist, wobei die Verbindungsvorrichtung (1) nach einem der Ansprüche 1 bis 9 ausgebildet und eingerichtet ist, zum manuell wahlweisen Verbinden und Trennen des robotischen Eingabegeräts (14) und der Robotervorrichtung (15).

## Claims

1. Connecting device (1) for the mechanically positively locking connection of a first object to a second object, comprising:
- a coupling means (2) having a first fastening portion (4.1) for fastening the coupling means (2) to the first object, with a socket (5) having an opening, via which a socket cavity (6) of the socket (5) is accessible in an axial plug-in direction (S), and at least one locking element (8) which is mounted adjustably between a locking position and an unlocking position and which projects into the socket cavity (6) of the socket (5) in its locking position and releases the socket cavity (6) of the socket (5) in its unlocking position,
- a mating coupling means (3) having a second fastening portion (4.2) for fastening the mating coupling means (3) to the second object, with a plug-in connector (7) corresponding to the socket (5) of the coupling means (2) and having a shank which can be plugged into the opening of the socket cavity (6) of the socket (5) in the axial plug-in direction (S), and at least one counter-locking element (9) interacting in a positively locking manner in the locking position of the locking element (8) of the socket (5),
**characterized in that**
- the socket cavity (6) of the socket (5) and the shank of the plug-in connector (7) corresponding to the socket cavity (6) have cross-sectional contours matched to each other, which allow a relative rotation of the coupling means (2) and the mating coupling means (3) around a rotational axis parallel to the plug-in direction (S) in a connected state of the coupling means (2) and the mating coupling means (3),
- further comprising an unlocking means (10) which is arranged on the mating coupling means (3) and is formed, in the case of a relative rotation of the coupling means (2) and the mating coupling means (3) about the axis of rotation, parallel to the plug-in direction (S), to move the locking element (8) of the coupling means (2) in a predetermined relative rotational angle position range of the coupling means (2) and the mating coupling means (3) from its locking position into an unlocking position, in which the locking element (8) of the coupling means (2) and the mating locking element (9) of the mating coupling means (3) are not engaged, such that the coupling means (2) and the mating coupling means (3) can be disconnected from each other counter to the plug-in direction (S).

2. Connecting device according to Claim 1, **characterized in that** the unlocking means (10) has at least one projection which projects radially outwards from the shank of the plug-in connector (7) and is formed to press the locking element (8) into the unlocking position in a first rotational angle position range of the mating coupling means (3) relative to the coupling means (2), and to leave the locking element (8) in its locking position in a second rotational angle position range of the mating coupling means (3) relative to the coupling means (2), which differs from the first rotational angle position range, wherein the locking element is spring-preloaded into its locking position and, in the first rotational angle position range of the mating coupling means (3) relative to the coupling means (2), the locking element (8) is pressed radially outwards into its unlocking position by the projection of the unlocking means (10) counter to a spring force.

3. Connecting device according to Claim 1, **characterized in that** the unlocking means (10) has at least one depression (10a), extending axially along the shank of the plug-in connector (7), in the lateral surface of the shank, which depression is formed, in a first rotational angle position range of the mating coupling means (3) relative to the coupling means (2), to align with the locking element (8) projecting radially inwards into the socket cavity (6) of the coupling means (2), wherein, in a second rotational angle position range, different from the first rotational angle position range, of the mating coupling means (3) relative to the coupling means (2), the unlocking means (10) overlaps in the radial direction with the locking element (8), such that, in this locking position, the mating coupling means (3) is held on the coupling means (2) in a positively locking manner in the axial direction.

4. Connecting device according to any one of Claims 1 to 3, **characterized in that** the mating coupling means (3) is coupled via a freewheel to the coupling means (2), in such a way that a relative rotation of the mating coupling means (3) and the coupling means (2) with respect to each other is only possible in one direction of rotation.

5. Connecting device according to any one of Claims 1 to 4, **characterized by** an intermediate plane, into which the mating locking element (9) of the mating coupling means (3) is introduced when the mating coupling means (3) is moved from the coupling means (2) counter to the plug-in direction (S), in order to disconnect the mating coupling means (3) from the coupling means (2) in the unlocking position, wherein the intermediate plane has positive-locking retaining means, which first of all prevent further disconnection of the mating coupling means (3) from the coupling means (2) beyond the intermediate plane and permit it only after additional rotation of the mating coupling means (3) relative to the coupling means (2) by a further rotational angle.

6. Connecting device according to any one of Claims 1 to 5, **characterized in that**, in a relative angular position, corresponding to the unlocking position, of the coupling means (2) with respect to the mating coupling means (3), the plug-in connector (7) of the mating coupling means (3) is held by means of a latching device (35) in its unlockable rotational position in a non-positive and/or positively locking manner relative to the socket (5) of the coupling means (2).

7. Connecting device according to Claim 6, **characterized in that** the latching device (35) comprises a latching pin (22a) which is pre-loaded on the coupling means (2) so as to project in the radial direction into the socket cavity (6) and, in the unlocking position, mechanically latches into a depression (23a), corresponding to the latching pin (22a) of the mating coupling means (3), in the shank of the plug-in connector (7).

8. Connecting device according to Claim 6, **characterized in that** the latching device comprises a first magnet (24.1) which is attached to the coupling means (2) and, in the unlocking position, interacts magnetically with a second magnet (24.2) arranged on the mating coupling means (3), in order to hold the mating coupling means (3) in the unlocking position relative to the coupling means (2) in its current rotational angle position.

9. Connecting device according to any one of Claims 1 to 8, **characterized in that** the coupling means (2) comprises at least one first repelling magnet (24a) and the mating coupling means (3) comprises a second repelling magnet (24b), wherein the first repelling magnet (24a) and the second repelling magnet (24b) are arranged relative to each other in such a way that, in an unlocking position of the coupling means (2) relative to the mating coupling means (3), the at least one first repelling magnet (24a) brings about, in interaction with the second repelling magnet (24b), a magnetic force which repels each other and presses the locking element (8), which is mounted adjustably on the coupling means (2), into its unlocking position.

10. System comprising a robot device (15), a robotic input unit (14) and a connecting device (1) according to any one of Claims 1 to 9, **characterized in that**, by means of its first fastening portion (4.1), the coupling means (2) is connected to the robot device (15) as the first object and, by means of its second fastening portion (4.2), the mating coupling means (3) is connected to the robotic input unit (14) as the second object, wherein the connecting device (1) according to any one of Claims 1 to 9 is designed and configured to manually selectively connect and disconnect the robotic input unit (14) and the robot device (15).

11. System comprising a robot device (15), a robotic input unit (14) and a connecting device (1) according to any one of Claims 1 to 9, **characterized in that**, by means of its first fastening portion (4.1), the coupling means (2) is connected to the robotic input unit (14) as the first object and, by means of its second fastening portion (4.2), the mating coupling means (3) is connected to the robot device (15) as the second object, wherein the connecting device (1) according to any one of Claims 1 to 9 is designed and configured to manually selectively connect and disconnect the robotic input unit (14) and the robot device (15).

## Revendications

1. Dispositif de raccordement (1) destiné à raccorder mécaniquement par complémentarité de forme un premier objet à un deuxième objet, comportant :
- un moyen d'accouplement (2) avec une première section de fixation (4.1) pour fixer le moyen d'accouplement (2) sur le premier objet, avec une douille (5) avec une ouverture par laquelle une cavité (6) de douille de la douille (5) est accessible dans une direction d'enfichage axiale (S), et au moins un élément de verrouillage (8) monté de manière ajustable entre une position de verrouillage et une position de déverrouillage, qui, dans sa position de verrouillage, fait saillie dans la cavité (6) de douille de la douille (5) et, dans sa position de déverrouillage, libère la cavité (6) de douille de la douille (5),
- un moyen de contre-accouplement (3) avec une deuxième section de fixation (4.2) pour fixer le moyen de contre-accouplement (3) sur le deuxième objet, avec une fiche (7) correspondant à la douille (5) du moyen d'accouplement (2) avec une tige pouvant être enfichée dans l'ouverture de la cavité (6) de douille de la douille (5) dans la direction d'enfichage axiale (S), et au moins un élément de contre-verrouillage (9) coopérant par complémentarité de forme dans la position de verrouillage de l'élément de verrouillage (8) de la douille (5),
**caractérisé en ce que**
- la cavité (6) de douille de la douille (5) et la tige de la fiche (7) correspondant à la cavité (6) de douille comportent des contours de section transversale adaptés les uns aux autres, qui permettent une rotation relative des moyens d'accouplement (2) et des moyens de contre-accouplement (3) autour d'un axe de rotation parallèle à la direction d'enfichage (S) lorsque les moyens d'accouplement (2) et les moyens de contre-accouplement (3) sont raccordés,
- comportant par ailleurs un moyen de déverrouillage (10) disposé sur le moyen de contre-accouplement (3), qui est formé pour déplacer, lors d'une rotation relative du moyen d'accouplement (2) et du moyen de contre-accouplement (3) autour de l'axe de rotation parallèle à la direction d'enfichage (S), l'élément de verrouillage (8) du moyen d'accouplement (2) dans une plage de positions d'angle de rotation relative prédéfinie du moyen d'accouplement (2) et du moyen de contre-accouplement (3) de sa position de verrouillage dans une position de déverrouillage, dans laquelle l'élément de verrouillage (8) du moyen d'accouplement (2) et l'élément de contre-verrouillage (9) du moyen de contre-accouplement (3) sont hors prise, de telle sorte que le moyen d'accouplement (2) et le moyen de contre-accouplement (3) peuvent être séparés l'un de l'autre dans la direction opposée à la direction d'enfichage (S).

2. Dispositif de raccordement selon la revendication 1, **caractérisé en ce que** le moyen de déverrouillage (10) comporte au moins un prolongement faisant saillie radialement vers l'extérieur depuis la tige de la fiche (7), qui est formé pour presser l'élément de verrouillage (8) dans la position de déverrouillage dans une première plage de positions d'angle de rotation du moyen de contre-accouplement (3) par rapport au moyen d'accouplement (2) et pour laisser l'élément de verrouillage (8) dans sa position de verrouillage dans une deuxième plage de positions d'angle de rotation du moyen de contre-accouplement (3), différente de la première plage de positions d'angle de rotation, par rapport au moyen d'accouplement (2), l'élément de verrouillage étant précontraint par ressort dans sa position de verrouillage et, dans la première plage de positions d'angle de rotation du moyen de contre-accouplement (3) par rapport au moyen d'accouplement (2), l'élément de verrouillage (8) étant poussé radialement vers l'extérieur dans sa position de déverrouillage à l'encontre d'une force de ressort par le prolongement du moyen de déverrouillage (10).

3. Dispositif de raccordement selon la revendication 1, **caractérisé en ce que** le moyen de déverrouillage (10) comporte au moins un renfoncement (10a) s'étendant axialement le long de la tige de la fiche (7) dans la surface enveloppante de la tige, lequel est formé pour s'aligner, dans une première plage de positions d'angle de rotation du moyen de contre-accouplement (3) par rapport au moyen d'accouplement (2), avec l'élément de verrouillage (8) faisant saillie radialement vers l'intérieur dans la cavité (6) de douille du moyen d'accouplement (2), le moyen de déverrouillage (10) chevauchant l'élément de verrouillage (8) dans la direction radiale dans une deuxième plage de positions d'angle de rotation du moyen de contre-accouplement (3), différente de la première plage de positions d'angle de rotation, par rapport au moyen d'accouplement (2), de telle sorte que, dans ladite position de verrouillage, le moyen de contre-accouplement (3) est maintenu par complémentarité de forme sur le moyen d'accouplement (2) dans la direction axiale.

4. Dispositif de raccordement selon l'une des revendications 1 à 3, **caractérisé en ce que** le moyen de contre-accouplement (3) est accouplé au moyen d'accouplement (2) par une roue libre de telle manière qu'une rotation relative du moyen de contre-accouplement (3) et du moyen d'accouplement (2) l'un par rapport à l'autre n'est possible que dans une direction de rotation.

5. Dispositif de raccordement selon l'une des revendications 1 à 4, **caractérisé par** un plan intermédiaire, dans lequel l'élément de contre-verrouillage (9) du moyen de contre-accouplement (3) est introduit lorsque le moyen de contre-accouplement (3) est déplacé par le moyen d'accouplement (2) dans la direction opposée à la direction d'enfichage (S) pour séparer le moyen de contre-accouplement (3) du moyen d'accouplement (2) dans la position de déverrouillage, le plan intermédiaire comportant des moyens de retenue agissant par complémentarité de forme, qui empêchent d'abord une séparation supplémentaire du moyen de contre-accouplement (3) du moyen d'accouplement (2) au-delà du plan intermédiaire et la permettent seulement après une rotation supplémentaire du moyen de contre-accouplement (3) par rapport au moyen d'accouplement (2) d'un autre angle de rotation.

6. Dispositif de raccordement selon l'une des revendications 1 à 5, **caractérisé en ce que**, dans une position angulaire relative, correspondant à la position de déverrouillage, du moyen d'accouplement (2) par rapport au moyen de contre-accouplement (3), la fiche (7) du moyen de contre-accouplement (3) est maintenue de manière stabilisée à force et/ou par complémentarité de forme dans sa position de rotation déverrouillable par rapport à la douille (5) du moyen d'accouplement (2) au moyen d'un dispositif d'enclenchement (35).

7. Dispositif de raccordement selon la revendication 6, **caractérisé en ce que** le dispositif d'enclenchement (35) comprend une broche d'enclenchement (22a) précontrainte de manière à faire saillie dans la direction radiale dans la cavité (6) de douille sur le moyen d'accouplement (2), laquelle s'enclenche, dans la position de déverrouillage, mécaniquement dans un renfoncement (23a) de la tige de la fiche (7) correspondant à la broche d'enclenchement (22a) du moyen de contre-accouplement (3).

8. Dispositif de raccordement selon la revendication 6, **caractérisé en ce que** le dispositif d'enclenchement comprend un premier aimant (24.1) installé sur le moyen d'accouplement (2), lequel coopère magnétiquement dans la position de déverrouillage avec un deuxième aimant (24.2) disposé sur le moyen de contre-accouplement (3) pour maintenir le moyen de contre-accouplement (3) dans sa position d'angle de rotation actuelle par rapport au moyen d'accouplement (2).

9. Dispositif de raccordement selon l'une des revendications 1 à 8, **caractérisé en ce que** le moyen d'accouplement (2) comprend au moins un premier aimant de répulsion (24a) et le moyen de contre-accouplement (3) comprend un deuxième aimant de répulsion (24b), le premier aimant de répulsion (24a) et le deuxième aimant de répulsion (24b) étant disposés l'un par rapport à l'autre de telle manière que, dans une position de déverrouillage du moyen d'accouplement (2) par rapport au moyen de contre-accouplement (3), l'au moins un premier aimant de répulsion (24a) entraîne, en coopération avec le deuxième aimant de répulsion (24b), une force magnétique qui se repousse, laquelle pousse l'élément de verrouillage (8) monté de manière ajustable sur le moyen d'accouplement (2) dans sa position de déverrouillage.

10. Système comprenant un dispositif robotisé (15), un appareil d'entrée robotisé (14) et un dispositif de raccordement (1) selon l'une des revendications 1 à 9, **caractérisé en ce que en ce que** le moyen d'accouplement (2) est raccordé au dispositif robotisé (15) en tant que premier objet au moyen de sa première section de fixation (4.1) et le moyen de contre-accouplement (3) est raccordé à l'appareil d'entrée robotisé (14) en tant que deuxième objet au moyen de sa deuxième section de fixation (4.2), le dispositif de raccordement (1) selon l'une des revendications 1 à 9 étant formé et mis au point pour raccorder et séparer manuellement au choix l'appareil d'entrée robotisé (14) et le dispositif robotisé (15).

11. Système comprenant un dispositif robotisé (15), un appareil d'entrée robotisé (14) et un dispositif de raccordement (1) selon l'une des revendications 1 à 9, **caractérisé en ce que en ce que** le moyen d'accouplement (2) est raccordé à l'appareil d'entrée robotisé (14) en tant que premier objet au moyen de sa première section de fixation (4.1) et le moyen de contre-accouplement (3) est raccordé au dispositif robotisé (15) en tant que deuxième objet au moyen de sa deuxième section de fixation (4.2), le dispositif de raccordement (1) selon l'une des revendications 1 à 9 étant formé et mis au point pour raccorder et séparer manuellement au choix l'appareil d'entrée robotisé (14) et le dispositif robotisé (15).
